# EUROPÄISCHE PATENTSCHRIFT

(11) **EP 1 957 594 B1**
(45) Veröffentlichungstag und Bekanntmachung des Hinweises auf die Patenterteilung: **24.07.2013**
(21) Anmeldenummer: 06830099.5
(22) Anmeldetag: 23.11.2006
(51) Int. Cl.: C09D 175/16, C08G 18/28, C08G 18/08, C08G 18/73, C08G 18/67, C08G 18/78

(54) **STRAHLUNGSHÄRTBARE WASSEREMULGIERBARE POLYISOCYANATE**
RADIATION-CURABLE WATER-EMULSIFIABLE POLYISOCYANATES
POLYISOCYANATES DURCISSABLES PAR RAYONNEMENT ET EMULSIONNABLES DANS L'EAU

(30) Priorität: 01.12.2005 DE 102005057683
(43) Veröffentlichungstag der Anmeldung: 20.08.2008
(73) Patentinhaber: BASF SE, 67056 Ludwigshafen (DE)
(72) Erfinder: WAGNER, Eva, 67346 Speyer (DE); BECK, Erich, 68526 Ladenburg (DE); STEINBRECHER, Angelika Maria, 70197 Stuttgart (DE); HEISCHKEL, Yvonne, 68199 Mannheim (DE); SCHWALM, Reinhold, 67157 Wachenheim (DE)
(86) Internationale Anmeldenummer: PCT/EP2006/068828
(87) Internationale Veröffentlichungsnummer: WO 2007/063026

(56) Entgegenhaltungen:
- WO-A-01/23453
- WO-A-01/42329
- WO-A-02/16459
- WO-A-02/079334
- WO-A-02/086000
- WO-A-2005/118689

## Beschreibung

Die Erfndung betrifft strahlungshärtbare wasseremulgierbare Verbindungen mit Isocyanatgruppen oder verkappten Isocyanatgruppen und deren Verwendung.

Zur Verringerung der teilweise recht hohen Viskosität von Polyisocyanaten kann es sinnvoll sein, diese mit Lösungsmitteln zu verdünnen. Lösungsmittel müssen jedoch aus den Beschichtungsmassen wieder entfernt werden und erhöhen dann den Gehalt an flüchtigen organischen Komponenten (VOC), der aus Umweltschutzgründen möglichst gering sein sollte. Daher werden Polyisocyanate häufig in Wasser dispergiert, wozu die Polyisocyanate jedoch wasseremulgierbar sein müssen.

Wasseremulgierbare Polyisocyanate sind weit verbreitet und sind meist aufgebaut aus mindestens einem Isocyanat und mindestens einem Emulgator, der mit dem Isocyanat chemisch verbunden sein kann oder von diesem getrennt ist.

EP-B 206 059 beschreibt derartige Systeme und deren Verwendung, z.B. in Klebstoffen.

EP-A 524 500 beschreibt isocyanuratgruppenhaltige Polyisocyanate, zu deren Herstellung ein gegebenenfalls alkoxylierter Alkohol mit mindestens 10 Kohlenstoffatomen eingesetzt wird.

EP-A 959 087 und DE-A 198 22 890 beschreiben Polyisocyanate mit Polyethern als nichtionischen Emulgatoren sowie gegebenenfalls ionischen Emulgatoren, in denen die Polyether zu mindestens 60 mol% über Allophanatgruppen gebunden sind.

DE-A 199 58 170 beschreibt ähnliche Polyisocyanate, in denen die Polyether zu 20 - 59 mol% über Allophanatgruppen gebunden sind.

Nachteilig an diesen Systemen ist, daß sie lediglich durch Reaktion mit einem beispielsweise hydroxygruppenhaltigen Bindemittel härtbar sind, aber nicht auf anderen Mechanismen, wie beispielsweise durch Strahlungshärtung.

Strahlungshärtbare Isocyanate sind ebenfalls weit verbreitet.

EP-A 928 800 beschreibt Beschichtungsmassen aus Urethan(meth)acrylaten mit freien Isocyanatgruppen, Photoinitiatoren und gegenüber Isocyanaten reaktiven Verbindungen.

DE-A 198 53 569 und DE-A 102 46 512 beschreibt iminooxadiazintriongruppenhaltige Polyisocyanate mit strahlungshärtbaren Gruppen.

Nachteilig an solchen Systemen ist, daß sie nicht wasseremulgierbar sind, so daß eine eventuell gewünschte Applikation aus Lösungsmitteln aus organischen Lösungsmitteln erfolgen muß.

EP-A 1138710 und EP-A 1085065 beschreiben Beschichtungsmassen aus isocyanatgruppenhaltigen Urethan(meth)acrylaten und gegenüber Isocyanat reaktiven Verbindungen. Als Aufbaukomponenten können auch Diole eingesetzt werden, die gegebenenfalls alkoxyliert sein können. Derartige Diole fungieren nicht oder nur schlecht als Emulgatoren, sondern vernetzen zwei Isocyanate, indem sie mit deren NCO-Gruppen reagieren. Dadurch wird die Molmasse erhöht, so daß die Produkte eine höhere Viskosität aufweisen.

Somit ist es mit diesen Beschichtungssystemen ebenfalls nicht möglich, wasseremulgierbare Polyisocyanate zu erhalten.

US 5767220 beschreibt allophanatgruppenhaltige, (meth)acryloylgruppenhaltige Polyisocyanate, in denen eine Alkoholkomponente, wenn auch weniger bevorzugt, ether- oder esterfunktionalisierte, alkoxylierte Produkte enthalten kann. Dazu wird aus einem Isocyanat mit der Alkoholkomponente ein Urethan gebildet, dieses mit einem anderen Isocyanat unter Allophanatisierungsbedingungen umgesetzt und das Allophanat dann mit einem Alkohol umgesetzt, der ethylenisch ungesättigte Doppelbindungen aufweist. Dies bedeutet, daß an der Allophanatgruppe die Alkoholkomponente gebunden ist, während der ethylenisch ungesättigte Doppelbindungen aufweisende Alkohol über eine Urethangruppe gebunden ist.

Die in US 5767220 beschriebenen Polyisocyanate sind jedoch im wesentlichen frei von Isocyanatgruppen, so daß sie nicht mit einer zweiten, beispielsweise hydroxygruppenhaltigen Komponente härtbar sind.

Die ältere deutsche Patentanmeldung mit dem Aktenzeichen 10 2005 008932.1 und dem Anmeldedatum 24.2.2005 offenbart wasseremulgierbare strahlungshärtbare Verbindungen mit Allophanatgruppen. Hier sind jedoch keine freien Isocyanatgruppen enthalten, so daß die dort beschriebenen Verbindungen nicht mit einer zweiten, beispielsweise hydroxygruppenhaltigen Komponente härtbar sind.

US 5459214 beschreibt ebenfalls (meth)acryloylgruppenhaltige Polyisocyanate. Die dort gelisteten Alkoholkomponenten sind jedoch nicht alkoxyliert, so daß die Produkte nicht wasseremulgierbar sind.

US 5739251 beschreibt allylethergruppenhaltige und gegebenenfalls zusätzlich (meth)acryloylgruppenhaltige Polyurethane, die im wesentlichen frei von Isocyanatgruppen sind. Durch Verweis auf die US 5235018 sind auch alkoxylierte Alkohole als Aufbaukomponenten beschrieben.

Nachteilig daran ist jedoch, daß Allylethergruppen schlecht strahlungshärtbar sind und dadurch, daß die offenbarten Polyurethane im wesentlichen frei von Isocyanatgruppen sind, diese nicht mit einer zweiten, beispielsweise hydroxygruppenhaltigen Komponente härtbar sind.

WO 02/86000 beschreibt Dual-Cure-härtbare Verbindungen mit Carbamat- oder Harnstoffendgruppen, die optional anionische emulgierbare Gruppen tragen können.

Nachteilig an diesen Beschichtungsmassen ist, daß der Anwender durch die Härtungsreaktion mit Carbamatgruppen auf solche Bindemittel beschränkt ist, die zur Reaktion mit Carbamatgruppen befähigt sind, beispielsweise Aminoharze, insbesondere Methanol-veretherte Melaminharze. Dadurch scheiden jedoch ganze Klassen von kommerziell verfügbaren Bindemitteln aus, was den Handlungsspielraum von Lackformulierern einschränkt.

WO 00/39183 beschreibt Urethan- und Allophanatgruppen enthaltende, radikalisch polymerisierbare, aktivierte C=C-Doppelbindungen enthaltende Isocyanate.

Derlei Verbindungen sind jedoch nicht wasseremulgierbar, sondern bilden auch nach starker Dispergierung schnell wieder zweiphasige Gemische.

Aufgabe der vorliegenden Erfindung war es, Dual-Cure-härtbare Systeme zur Verfügung zu stellen, die in Wasser emulgierbar sind, mit gängigen Bindemitteln reagieren können, möglichst zusätzlich eine niedrige Viskosität aufweisen und gute Oberflächeneigenschaften zeigen. Insbesondere sollte gegenüber vergleichbaren Verbindungen mindestens einer der folgenden Parameter verbessert sein: Härte, Kratzfestigkeit, Chemikalienbeständigkeit, Haftung, Elastizität. Zudem soll der Gehalt an flüchtigen organischen Komponenten (VOC) möglichst gering gehalten werden.

Die Aufgabe wurde gelöst durch wasseremulgierbare, strahlungshärtbare Polyisocyanate (A), enthaltend als Aufbaukomponenten
a) mindestens ein organisches Di- oder Polyisocyanat,
b) mindestens eine Verbindung mit mindestens einer gegenüber Isocyanat reaktiven Gruppe und mindestens einer radikalisch polymerisierbaren ungesättigten Gruppe und/oder mindestens einer kationisch polymerisierbaren Gruppe, ausgewählt aus gegebenenfalls substituierten Acryloylgruppen und gegebenenfalls substituierten Vinylethergruppen,
c) gegebenenfalls mindestens ein weiteres organisches Di- oder Polyisocyanat, das von a) verschieden ist,
d) mindestens eine Verbindung mit genau einer gegenüber Isocyanat reaktiven Gruppe und mindestens einer gesättigten dispergieraktiven Gruppe,
e) gegebenenfalls mindestens eine Verbindung mit mindestens zwei gegenüber Isocyanat reaktiven Gruppen sowie
f) gegebenenfalls von a) bis d) verschiedene Verbindungen mit mindestens einer gegenüber Isocyanat reaktiven Gruppe,
mit einem Gehalt an Allophanatgruppen (berechnet als C₂N₂HO₃ = 101 g/mol) von 1 bis 30 Gew%,
wobei die Mehrzahl der Verbindung b) über Allophanatgruppen gebunden ist,
wobei als Aufbaukomponenten verkappte Aminogruppen-, Carbamatendgruppen- und/oder Harnstoffendgruppen-tragende Verbindungen ausgeschlossen sind und
wobei der Isocyanatgehalt, berechnet als NCO mit dem Molekulargewicht 42 g/mol, mindestens 3 Gew% und bis zu 25 Gew% beträgt, wobei es sich bei der Verbindung d) um mindestens eine Verbindung d3) handelt, die als dispergieraktive Gruppe mindestens eine nichtionische Gruppe trägt, bei der es sich um einen einwertigen Polyalkylenoxidpolyetheralkohol handelt, der 5 bis 90 Ethylenoxideinheiten enthält.

In einer bevorzugten Ausführungsform wird aus den Komponenten a) und b) zunächst ein sowohl Isocyanatgruppen als auch Allophanatgruppen aufweisende Polyisocyanat hergestellt, daß dann weiter mit den Komponenten d) und gegebenenfalls c), e) und/oder f) umgesetzt wird.

Die Herstellung des sowohl Isocyanatgruppen als auch Allophanatgruppen aufweisenden Polyisocyanats kann beispielsweise gemäß der DE 102 46 512 A oder der WO 00/39183 A erfolgen, bevorzugt gemäß der in der WO 00/39183 A beschriebenen Herstellung.

Als Aufbaukomponenten erfindungsgemäß ausgeschlossen sind verkappte Aminogruppen-, Carbamatendgruppen- und/oder Harnstoffendgruppen-tragende Verbindungen.

Das zahlenmittlere Molekulargewicht Mₙ dieser erfindungsgemäßen Verbindungen (A), bestimmt durch Gelpermeationschromatographie mit Tetrahydrofuran als Elutionsmittel und Polystyrol als Standard, kann beispielsweise zwischen 400 und 50000, bevorzugt zwischen 500 und 30000, besonders bevorzugt zwischen 750 und 10000 und insbesondere zwischen 1000 und 5000 betragen.

Der Gehalt an ungesättigten radikalisch oder kationisch polymerisierbaren Gruppen kann beispielsweise mindestens 0,01 mol/100 g Verbindung, bevorzugt mindestens 0,05, besonders bevorzugt mindestens 0,1 und insbesondere mindestens 0,15 mol/100 g betragen.

Der Gehalt an ungesättigten radikalisch oder kationisch polymerisierbaren Gruppen kann beispielsweise bis zu 1 mol/100 g Verbindung, bevorzugt bis zu 0,8, besonders bevorzugt bis zu 0,6, insbesondere bis zu 0,5 und speziell bis zu 0,4 mol/100 g betragen.

Der Gehalt an Isocyanatgruppen, berechnet als NCO mit dem Molekulargewicht 42 g/mol beträgt erfindungsgemäß mindestens 3 bis zu 25 Gew%. Falls blockierte Isocyanatgruppen enthalten sind, so werden diese in den Gehalt an Isocyanatgruppen mit einberechnet.

Der Gehalt an Isocyanatgruppen, berechnet als NCO mit dem Molekulargewicht 42 g/mol beträgt erfindungsgemäß mindestens 3, bevorzugt mindestens 5, besonders bevorzugt mindestens 7 und ganz besonders bevorzugt mindestens 10 Gew%. In der Regel beträgt der Gehalt an Isocyanatgruppen bis zu 25, bevorzugt bis zu 23, besonders bevorzugt bis zu 20 und ganz besonders bevorzugt bis zu 17 Gew%. Falls blockierte Isocyanatgruppen enthalten sind, so werden diese in den Gehalt an Isocyanatgruppen als NCO-Gruppen mit dem Molekulargewicht 4.2 g/mol mit einberechnet.

Der Gehalt an Allophanatgruppen (berechnet als C₂N₂HO₃ = 101 g/mol) bei den erfindungsgemäß Polyisocyanaten beträgt mindestens 1, bevorzugt mindestens 3 und besonders bevorzugt mindestens 8 Gew%.

Der Anteil der über Allophanatgruppen gebundenen Verbindungen b) beträgt erfindungsgemäß mindestens 50 mol%, bevorzugt mindestens 60, besonders bevorzugt mindestens 75 und ganz besonders bevorzugt mindestens 85 mol% bzgl. der Gesamtmenge an b).

Die erfindungsgemäßen Polyisocyanate (A) enthalten als Aufbaukomponenten im wesentlichen die oben angeführten Komponenten a), b) und d) sowie gegebenenfalls die Komponenten c), e) und/oder f).

Weiterhin wurden Beschichtungsmassen gefunden, die im wesentlichen enthalten
(A) ein erfindungsgemäßes Polyisocyanat,
(C) gegebenenfalls einen oder mehrere photochemisch und/oder thermisch a ktivierbare(n) Initiator(en),
(D) gegebenenfalls weitere lacktypische Additive,
(E) mindestens eine Verbindung mit mehr als zwei gegenüber Isocyanat reaktiven Gruppen (Bindemittel) sowie
(F) gegebenenfalls mindestens eine Verbindung mit einer oder mehr als einer radikalisch polymerisierbaren Doppelbindung.

Die Verbindungen (C) und (D) können auch den Polyisocyanaten zugesetzt werden, wenn man Lackformulierungen zur Herstellung von Dual Cure Lacken bereiten will.

Als Komponente a) kommen beispielsweise aliphatische, aromatische und cycloaliphetische Di- und Polyisocyanate mit einer NCO Funktionalität von mindestens 1,8, bevorzugt 1,8 bis 5 und besonders bevorzugt 2 bis 4 in Frage, sowie deren gegebenenfalls gemischte Isocyanurate, Biurete, Urethane, Allophanate, Uretdione, Oxadiazintrione, Iminooxadiazintrione und/oder Carbodiimide oder solche enthaltenden Gemische.

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen oder Iminooxadiazindiongruppen enthaltende Polyisocyanate, Uretonimin-modifizierte Polyisocyanate von geradlinigen oder verzweigten C₄-C₂₀-Alkyiendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Derivate des Lysindiisocyanates, Trimethylhexandiisocyanat oder Tetramethylhexandiisocyanat sowie 3 (bzw. 4), 8 (bzw. 9)-Bis(aminomethyl)-tricyclo[5.2.1.0^{2.6}]decan-Isomerengemische, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan (Isophorondiisocyanat), 1,3- oder 1 ,4-Bis(isocyanatomethyl)cyclohexan oder 2,4-, oder 2,6-DÜsocyanato-1-methylcyclohexan sowie aromatische Diisocyanate wie 2,4- oder 2,6-Toluylendiisocyanat und deren Isomerengemische, m- oder p-Xylylendilsocyanat, 2,4'-oder 4,4'-Diisocyanatodiphenylmethan und deren Isomerengemische, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.
Es können auch Gemische der genannten Diisocyanate vorliegen.

Als höhere Isocyanate mit im Mittel mehr als 2 Isocyanatgruppen eignen sich beispielsweise Triisocyanate wie 2,4,6-Triisocyanatotoluol, Triphenylmethantriisocyanat oder 2,4,4'-Triisocyanatodiphenylether oder die Gemische aus Di-, Tri- und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw. cycloaliphatische Di- und Polyisocyanate, z.B. die vorstehend genannten aliphatischen bzw. cycloaliphatischen Diisocyanate, oder deren Mischungen.

Besonders bevorzugt sind Hexamethylendiisocyanat, 1,3-Bis(isocyanatomethyl)cyclohexan, Isophorondiisocyanat und 4,4'- oder 2,4'-Di(isocyanatocyclohexyl)methan, ganz besonders bevorzugt sind Isophorondiisocyanat und Hexamethylendiisocyanat, insbesondere bevorzugt ist Hexamethylendiisocyanat.

Für das erfindungsgemäße Verfahren können sowohl solche Di- und Polyisocyanate eingesetzt werden, die durch Phosgenierung der korrespondierenden Amine erhalten werden, als auch solche, die ohne die Verwendung von Phosgen, d. h. nach phosgenfreien Verfahren, hergestellt werden. Nach Angaben der EP-A-0 126 299 (USP 4 596 678), EP-A-126 300 (USP 4 596 679) und EP-A-355 443 (USP 5 087 739) beispielsweise können (cyclo)aliphatische Diisocyanate, z.B. wie 1,6-Hexamethylendiisocyanat (HDI), isomere aliphatische Diisocyanate mit 6 Kohlenstoffatomen im Alkylenrest und 1 -Isocyanato-3-isocyanato-methyl-3,6,5-trimethyl-cyclohexan (Isophorondiisocyanat bzw. IPDI) hergestellt werden durch Umsetzung der (cyclo)aliphatischen Diamine mit beispielsweise Harnstoff und Alkoholen zu (cyclo)aliphatischen Biscarbaminsäureestern und deren thermische Spaltung in die entsprechenden Diisocyanate und Alkohole. Die Synthese erfolgt kontinuierlich in einem Kreislaufverfahren und gegebenenfalls in Gegenwart von N-unsubstituierten Carbaminsäureestern, Dialkylcarbonaten und anderen aus dem Reaktionsprozeß zurückgeführten Nebenprodukten. So erhaltene Di- oder Polyisocyanate weisen in der Regel einen sehr geringen Anteil an chlorierten Verbindungen auf, was zu günstigen Farbzahlen der Produkte führt.

In einer bevorzugten Ausführungsform der vorliegenden Erfindung weisen die Di- und Polyisocyanate a) und/oder c) einen Gesamtgehalt an hydrolysierbarem Chlor von weniger als 200 ppm auf, bevorzugt von weniger als 120 ppm, besonders bevorzugt weniger als 80 ppm, ganz besonders bevorzugt weniger als 50 ppm, insbesondere weniger als 15 ppm und speziell weniger als 10 ppm. Dies kann beispielsweise gemessen werden durch die ASTM-Vorschrift D4663-98.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyan-urate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-% und eine mittlere NCO-Funktionalität von 2,6 bis 8.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiondiisocyanate können erfindungsgemäß als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 2,8 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit ein- oder mehrwertigen Alkoholen wie z.B. Methanol, Ethanol, iso-Propanol, n-Propanol, n-Butanol, iso-Butanol, *sek-Butanol, tert-*Butanol, n-Hexanol, n-Heptanol, n-Octanol, n-Decanol, n-Dodecanol (Laurylalkohol), 2-Ethylhexanol, n-Pentanol, Stearylalkohol, Cetylalkohol, Laurylalkohol, Ethylenglykolmonomethylether, Ethylenglykolmonoethylether, 1,3-Propandiolmonomethylether, Cyclopentanol, Cyclohexanol, Cyclooctanol, Cyclododecanol, Trimethylolpropan, Neopentylglykol, Pentaerythrit, 1,4-Butan-diol, 1,6-Hexandiol, 1,3-Propandiol, 2-Ethyl-1,3-Propandiol, 2-Methyl-1,3-Propan-diol, Ethylenglykol, Diethylenglykol, Triethylenglykol, Tetraethylenglykol, Pentaethylenglykol, Glycerin, 1,2-Dihydroxypropan, 2,2-Dimethyl-1,2-ethandiol, 1,2-Butandiol, 1,4-Butandiol, 3-Methylpentan-1,5-diol, 2-Ethylhexan-1,3-diol, 2,4-Diethyloctan-1,3-diol, Hydroxy-pivalinsäureneopentylglykolester, Ditrimethylolpropan, Dipentaerythrit, 2,2-Bis(4-hydro-xycyclohexyl)propan, 1,1-, 1,2-, 1,3- und 1,4-Cyclohexandimethanol, 1,2-, 1,3- oder 1,4-Cyclohexandiol oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 4.5.
5) Oxadiazintriongruppen enthaltende Polyisocyanate, vorzugsweise von Hexamethylendilsocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazin-diongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.

Die Polyisocyanate 1) bis 8) können im Gemisch, gegebenenfalls auch im Gemisch mit Diisocyanaten, eingesetzt werden.

Bevorzugt werden die Isocyanate a) als Diisocyanate eingesetzt, besonders bevorzugt sind 1,6-Hexamethylendiisocyanat (HDI) und 1 -Isocyanato-3-isocyanato-methyl-3,5,5-trimethyl-cyclohexan, ganz besonders bevorzugt ist 1,6-Hexamethylendiisocyanat (HDI).

Ganz besonders bevorzugt beträgt der Gehalt an Oxadiazintriongruppen weniger als 5 Gew%, insbesondere weniger als 2,5 und speziell weniger als 1 Gew%. Es kann sogar von Vorteil sein, daß der Gehalt an Oxadiazintriongruppen weniger als 0,7, bevorzugt weniger als 0,6, besonders bevorzugt weniger als 0,5, ganz besonders bevorzugt weniger als 0,3, insbesondere weniger als 0,2 und speziell weniger als 0,1 Gew% beträgt.

Als Komponente b) kommen Verbindungen in Betracht, die mindestens eine, bevorzugt genau eine gegenüber Isocyanat reaktive Gruppe und mindestens eine radikalisch und/oder mindestens eine kationisch polymerisierbare Gruppe tragen ausgewählt aus gegebenenfalls substituierten Acryloylgruppen und gegebenenfalls substituierten Vinylethergruppen.

Unter gegebenenfalls substituierten Acryloylgruppen werden hier in Position 2 und/oder 3 einfach, mehrfach oder unsubstituierte Acryloylgruppen verstanden, wobei der Carbonylkohlenstoff Position 1 darstellt, und wobei die Substituenten ausgewählt sein können aus der Gruppe bestehend aus C₁-C₄-Alkyl, Hydroxy-C₁-C₄-Alkyl, Phenyl, Carboxyl (Hydroxycarbonyl) und C₁-C₄-Alkyloxycarbonyl, Bevorzugt sind Methyl, Phenyl und Carboxyl, besonders bevorzugt sind Methyl und Carboxyl, ganz besonders bevorzugt ist Methyl.

Die gegebenenfalls substituierten Acryloylgruppen sind wahlweise über Sauerstoff, Schwefel oder unsubstituierten Stickstoff gebunden, bevorzugt über Sauerstoff oder unsubstituierten Stickstoff und besonders bevorzugt über Sauerstoff.

Beispiele für bevorzugte, über Sauerstoff gebundene, gegebenenfalls substituierte Acryloylgruppen sind Ester von Acrylsäure, Methacrylsäure, Crotonsäure, Itaconsäure, Fumarsäure, Maleinsäure oder Zimtsäure, besonders bevorzugt sind Ester von Acrylsäure und Methacrylsäure und ganz besonders bevorzugt sind Ester von Acrylsäure.

Mit gegebenenfalls substituierten Vinylethergruppen werden hier in Position 1 und/oder 2 einfach, mehrfach oder unsubstituierte Vinylethergruppen verstanden, wobei das Kohlenstoffatom der Doppelbindung, das an das Ethersauerstoffatom gebunden ist die Position 1 darstellt, und wobei die Substituenten ausgewählt sein können aus der Gruppe bestehend aus C₁-C₄-Alkyl, Hydroxy-C₁-C₄-Alkyl, Phenyl, Carboxyl (Hydroxycarbonyl) und C₁-C₄-Alkyloxycarbonyl. Bevorzugt sind Methyl, Phenyl und Carboxyl, besonders bevorzugt sind Methyl und Carboxyl, ganz besonders bevorzugt ist Methyl.

Beispiele für bevorzugte Vinylethergruppen sind Vinyloxy-, Propenyl-2-oxy-, Propenyl-1-oxy- und 2-Phenylvinyloxygruppen, besonders bevorzugt ist eine Vinyloxygruppe.

Die Anzahl der Gruppen kann bis zu 6 betragen, bevorzugt bis zu 5, besonders bevorzugt bis zu 4, ganz besonders bevorzugt bis zu 3, insbesondere bs zu 2 und speziell eine.

Gegenüber Isocyanat reaktive Gruppen können z.B. sein -OH, -SH, -NH₂ und -NHR⁴, wobei R⁴ Wasserstoff oder C₁-C₄-Alkyl oder C₃-C₁₂-Cycloalkyl bedeuten kann.

Die Anzahl der Gruppen kann 1 bis 5 betragen, bevorzugt 1 bis 4, besonders bevorzugt 1 bis 3, ganz besonders bevorzugt 1 is 2 und insbesondere eine.

C₁-C₄-Alkyl bedeutet im Rahmen dieser Schrift Methyl, Ethyl, iso-Propyl, n-Propyl, n-Butyl, *iso-Butyl, sek-Butyl* oder tert-Butyl.

C₃-C₁₂-Cycloalkyl bedeutet im Rahmen dieser Schrift Cyclopropyl, Cyclopentyl, Cyclohexyl oder Cyclodedecyl.

Bevorzugte Komponenten b) sind beispielsweise Monoester von α,β-ungesättigten Carbonsäuren, wie Acrylsäure, Methacrylsäure (in dieser Schrift kurz als "(Meth)acrylsäure" bezeichnet), Crotonsäure, Itaconsäure, Fumarsäure, Maleinsäure, Acrylamidoglykolsäure, Methacrylamidoglykolsäure oder Vinylether mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-Propandiol, 2-Methyl-1,3-Propandiol, 2-Butyl-2-ethyl-1,3-Propandiol, 1,6-Hexandiol, 2-Methyl-1,5-pentandiol, 2-Ethyl-1,4-butandiol, 2-Ethyl-1,3-Hexandiol, 2,4-Diethyl-oktan-1,3-diol, 2,2-Bis(4-hydroxycyclohexyl)propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt. Weiterhin können auch Ester oder Amide der (Meth)acrylsäure mit Aminoalkoholen z. B. 2-Aminoethanol, 2-(Methylamino)ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin verwendet werden.

Weiterhin sind auch ungesättigte Polyether- oder Polyesterole oder Polyacrylatpolyole mit einer mittleren OH-Funktionalität von 2 bis 10 als Verbindungen b) geeignet.

Beispiele für Amide ethylenisch ungesättigter Carbonsäuren mit Aminoalkoholen sind Hydroxyalkyl(meth)acrylamide wie N-Hydroxymethylacrylamid, N-Hydroxymethylmethacrylamid, N-Hydroxyethylacrylamid, N-Hydroyxethylmethacrylamid, 5-Hydroxy-3-oxapentyl(meth)acrylamid, N-Hydroxyalkylcrotonamide wie N-Hydroxymethylcrotonamid oder N-Hydroxyalkylmaleinimide wie N-Hydroxyethylmaleinimid.

Bevorzugt verwendet werden 2-Hydroxyethyl(meth)acrylat, 2- oder 3-Hydroxypropyl(meth)acrylat, 1,4-Butandiolmono(meth)acrylat, 1,6-Hexandiolmono-(meth)acrylat, Neopentylglykolmono(meth)acrylat, Glycerinmono- und di(meth)acrylat, Trimethylolpropanmono- und di(meth)acrylat, Pentaerythritmono-, -di- und - tri(meth)acrylat sowie 4-Hydroxybutylvinylether, 2-Thioethyl(meth)acrylat, 2-Hydroxyethyl(meth)acrylamid, 2-Hydroxypropyl(meth)acrylamid oder 3-Hydroxypropyl-(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat und 3-(Acryloyloxy)-2-hydroxypropylacrylat und ganz besonders bevorzugt sind 2-Hydroxyethylacrylat und 2-Hydroxyethylmethacrylat.

Als Komponente c) kommt optional mindestens ein weiteres organisches Di- oder Polyisocyanat, das von a) verschieden ist, in Betracht. Dabei handelt es sich um die oben unter a) aufgelisteten Di- und Polyisocyanate.

Als Komponente d) kommen Verbindungen mit genau einer gegenüber Isocyanat reaktiven Gruppe und mindestens einer dispergieraktiven Gruppe in Betracht.

Verbindungen d) mit mehr als einer gegenüber Isocyanat reaktiven Gruppe sind erfindungsgemäß ausdrücklich ausgeschlossen.

Bei den dispergieraktiven Gruppen handelt es sich um
d3) um nichtionische Gruppen.

Erfindungsgemäß handelt es sich bei den Verbindungen d) um solche Verbindungen, die keine polymerisierbare C-C-Bindungen enthalten.

Verbindungen d3) sind monofunktionelle Polyalkylenoxidpolyetheralkohole, die durch Alkoxylierung geeigneter Startermoleküle erhältlich sind.

Geeignete Startermoleküle zur Herstellung solcher Polyalkylenoxidpolyetheralkohole sind Thiolverbindungen, Monohydroxyverbindungen der allgemeinen Formel

R⁸-O-H

oder sekundäre Monoamine der allgemeinen Formel

R⁶R⁷N-H,

in welchen
R⁶, R⁷ und R⁸ unabhängig voneinander unabhängig voneinander jeweils C₁ - C₁₈-Alkyl, gegebenenfalls durch ein oder mehrere Sauerstoff- und/oder Schwefelatome und/oder ein oder mehrere substituierte oder unsubstituierte Iminogruppen unterbrochenes C₂ - C₁₈-Alkyl, C₆ - C₁₂-Aryl, C₅ - C₁₂-Cycloalkyl oder einen fünf- bis sechsgliedrigen, Sauerstoff-, Stickstoff- und/oder Schwefelatome aufweisenden Heterocyclus bedeuten oder R⁶ und R⁷ gemeinsam einen ungesättigten, gesättigten oder aromatischen und gegebenenfalls durch ein oder mehrere Sauerstoff- und/oder Schwefelatome und/oder ein oder mehrere substituierte oder unsubstituierte Iminogruppen unterbrochenen Ring bilden, wobei die genannten Reste jeweils durch funktionelle Gruppen, Aryl, Alkyl, Aryloxy, Alkyloxy, Halogen, Heteroatome und/oder Heterocyclen substituiert sein können.

Bevorzugt sind R⁶, R⁷ und R⁸ unabhängig voneinander C₁- bis C₄-Alkyl, besonders bevorzugt sind R⁶, R⁷ und R⁸ Methyl.

Beispielsweise geeignete einwertige Startermoleküle können gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, Cyclopentanol, die isomeren Methylcyclohexanole oder Hydroxymethylcyclohexan, 3-Ethyl-3-hydroxymethyloxetan, oder Tetrahydrofurfurylalkohol; aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Di-n-Butylamin, Diisobutylamin, Bis-(2-ethylhexyl)-amin, N-Methyl- und N-Ethylcyclohexylamin oder Dicyclohexylamin, heterocylische sekundäre Amine wie Morpholin, Pyrrolidin, Piperidin oder 1 H-Pyrazol, sowie Aminoalkohole wie 2-Dimethylaminoethanol, 2-Diethylaminoethanol, 2-Diisopropylaminoethanol, 2-Dibutylaminoethanol, 3-(Dimethylamino)-1-propanol oder 1-(Dimethylamino)-2-propanol.

Bevorzugt sind als Startermoleküle Alkohole mit nicht mehr als 6 Kohlenstoffatomen, besonders bevorzugt nicht mehr als 4 Kohlenstoffatomen, ganz besonders bevorzugt nicht mehr als 2 Kohlenstoffatomen und insbesondere Methanol.

Für die Alkoxylierungsreaktion geeignete Alkylenoxide sind Ethylenoxid, Propylenoxid, iso-Butylenoxid, Vinyloxiran und/oder Styroloxid, die in beliebiger Reihenfolge oder auch im Gemisch bei der Alkoxylierungsreaktion eingesetzt werden können.

Bevorzugte Alkylenoxide sind Ethylenoxid, Propylenoxid und deren Gemische, besonders bevorzugt ist Ethylenoxid.

Bevorzugte Polyetheralkohole sind solche auf Basis von Polyalkylenoxidpolyetheralkoholen, bei deren Herstellung gesättigte aliphatische oder cycloaliphatische Alkohole der oben genannten Art als Startermoleküle eingesetzt wurden. Ganz besonders bevorzugt sind solche auf Basis von Polyalkylenoxidpolyetheralkoholen, die unter Verwendung von gesättigten aliphatischen Alkoholen mit 1 bis 4 Kohlenstoffatomen im Alkylrest hergestellt wurden. Insbesondere bevorzugt sind auf Methanol gestartete Polyalkylenoxidpolyetheralkohole.

Die einwertigen Polyalkylenoxidpolyetheralkohole weisen im statistischen Mittel in der Regel mindestens 2 Alkylenoxideinheiten, bevorzugt 5 Ethylenoxideinheiten, pro Molekül in einpolymerisierter Form auf, besonders bevorzugt mindestens 7, ganz besonders bevorzugt mindestens 10 und insbesondere mindestens 15.

Die einwertigen Polyalkylenoxidpolyetheralkohole weisen im statistischen Mittel in der Regel bis zu 90 Alkylenoxideinheiten, bevorzugt Ethylenoxideinheiten, pro Molekül in einpolymerisierter Form auf, bevorzugt bis zu 45, besonders bevorzugt bis zu 40 und ganz besonders bevorzugt bis zu 30.

Das Molgewicht der einwertigen Polyalkylenoxidpolyetheralkohole beträgt bevorzugt bis zu 2000, besonders bevorzugt nicht über 1000 g/mol, ganz besonders bevorzugt 1000 ± 500 g/mol.

Bevorzugte Polyetheralkohole sind somit Verbindungen der Formel

R⁸-O-[-Xᵢ-]ₖ-H

worin
R⁸ die oben genannten Bedeutungen hat,
k für eine ganze Zahl von 2 bis 50, bevorzugt 5 bis 45, besonders bevorzugt 7 bis 40 und ganz besonders bevorzugt 10 bis 30 steht und
jedes Xᵢ für i = 1 bis k unabhängig voneinander ausgewählt sein kann aus der Gruppe bestehend aus -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃)-CH₂-O-, und besonders bevorzugt -CH₂-CH₂-O-worin Ph für Phenyl und Vin für Vinyl steht.

Als Komponente e) kommen Verbindungen in Betracht, die mindestens zwei gegenüber Isocyanat reaktive Gruppen, beispielsweise -OH, -SH, -NH₂ und/oder -NHR⁵, worin R⁵ die gleiche Bedeutung aufweist, wie oben für R⁴ angeführt, jedoch von R⁴ unterschiedlich sein kann, aufweisen.

Bevorzugte als Komponenten e) verwendbare Verbindungen weisen 2 -10 gegenüber Isocyanat reaktive Gruppen auf, besonders bevorzugt 2 - 6, ganz besonders bevorzugt 2 - 4 und insbesondere 2 - 3 gegenüber Isocyanat reaktive Gruppen, bevorzugt -OH und/oder -NH₂ und besonders bevorzugt -OH-Gruppen.

Dabei handelt es sich auch z.B. um Polymere mit einem Gehalt an Hydroxygruppen von 0,1 bis 20, vorzugsweise 0,5 bis 10 Gew.-%. Das zahlenmittlere Molekulargewicht Mₙ solcher Polymeren beträgt dann bevorzugt unter 1000, besonders bevorzugt unter 500 und ganz besonders bevorzugt unter 250 g/mol.

Besonders bevorzugt sind als Komponenten e) Diole oder Polyole, wie 2 bis 20 Kohlenstoffatome aufweisende Kohlenwasserstoffdiole, z.B. Ethylenglycol, 1,2-Propandiol, 1,3-Propandiol, 2-Butyl-2-ethyl-1,3-Propandiol, 2-Ethyl-1,3-Propandiol, 2-Methyl-1,3-Propandiol, 2-Ethyl-1,3-Hexandiol, 2,4-Diethyl-oktan-1,3-diol, 1,1-Dimethylethan-1,2-diol, 1,2-, 1,3- oder 1,4-Butandiol, 1,6-Hexandiol, 1,10-Dekandiol, Bis-(4-hydroxycyclohexan) isopropyliden, Tetramethylcyclobutandiol, 1,2-, 1,3- oder 1,4-Cyclohexandiol, Cyclooctandiol, Norbornandiol, Pinandiol, Decalindiol, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, Trimethylolbutan, Trimethylolpropan, Trimethylolethan, Neopentylglykol, Hydroxypivalinsäureneopentylglykolester, Pentaerythrit, Glycerin, Ditrimethylolpropan, Dipentaerythrit, Hydrochinon, deren Ester mit kurzkettigen Dicarbonsäuren, wie Adipinsäure, Cyclohexandicarbonsäure, deren Carbonate, hergestellt durch Reaktion der Diole mit Phosgen oder durch Umesterung mit Dialkyl- oder Diarylcarbonaten, oder aliphatische Diamine, wie Methylen-, und Isopropyliden-bis-(cyclohexylamin), Piperazin, 1,2-, 1,3-oder 1,4-Diaminocyclohexan, 1,2-, 1,3-oder 1,4-Cyclohexan-bis-(methylamin), Dithiole oder mehrfunktionelle Alkohole, sekundäre oder primäre Aminoalkohole, wie Ethanolamin, Diethanolamin, Monopropanolamin, Dipropanolamin oder Thioalkohole, wie Thioethylenglykol.

Weiterhin sind denkbar Diethylenglykol, Triethylenglykol, Dipropylenglykol, Tripropylenglykol, Neopentylglykol, 1,5-Pentandiol, 2-Methyl-1,5-pentandiol, 2-Ethyl-1,4-butandiol, Erythrit und Sorbit, 2-Aminoethanol, 3-Amino-1-propanol, 1-Amino-2-propanol oder 2-(2-Aminoethoxy)ethanol oder Butantriol.

Weiterhin sind auch ungesättigte Polyether- oder Polyesterole oder Polyacrylatpolyole mit einer mittleren OH-Funktionalität von 2 bis 10 geeignet, sowie Polyamine, wie z.B. Polyethylenimin oder freie Aminogruppen enthaltende Polymere von z.B. Poly-N-vinylformamid.

Als Komponente f) kommen Verbindungen mit mindestens einer gegenüber Isocyanat reaktiven Gruppe in Betracht. Dies können beispielsweise 1 bis 20 Kohlenstoffatome aufweisende Monoalkohole, Mercaptane oder Monoamine sein, z.B. Methanol, Ethanol, iso-Propanol, n-Propanol, n-Butanol, Iso-Butanol, sek-Butanol, ter-Butanol, Ethylenglykolmonomethylether, Ethylenglykolmonoethylether, Diethylenglykolmonomethylether, Diethylenglykolmonoethylether, 1,3-Propandiolmonomethylether, 1,2-Propandiolmonoethylether, 1,2-Propandiolmonomethylether, n-Hexanol, n-Heptanol, n-Octanol, n-Decanol, n-Dodecanol, 2-Ethylhexanol, Cyclopentanol, Cyclohexanol, Cyclooctanol, Cyclododecanol, Triethylenglykolmonomethylether, Triethylenglykolmonoethylether, n-Pentanol, Stearylalkohol, Cetylalkohol, Laurylalkohol, Cyclopent-2-en-1-ol, Cyclopent-3-en-1-ol, Cyclohex-2-en-1-ol, Allylalkohol, Methylamin, Ethylamin, *iso-*Propylamin, n-Propylamin, n-Butylamin, *iso*-Butylamin, *sek*-Butylamin, *tert*-Butylamin, n-Pentylamin, n-Hexylamin, n-Heptylamin, n-Octylamin, n-Decylamin, n-Dodecylamin, 2-Ethylhexylamin, Stearylamin, Cetylamin, Laurylamin, Dimethylamin, Diethylamin, Din-Propylamin, Di-*iso*-Propylamin, Di-n-Butylamin, Dihexylamin, Dioctylamin, Ethylmethylamin, *Iso*-Propyl-Methylamin, n-Butylmethylamin, *tert*-Butylmethylamin, *Iso*-Propyl-Ethylamin, n-Butylethylamin, *tert*-Butylethylamin, Cyclopentylamin, Cyclohexylamin, Cyclooctylamin, Cyclododecylamin, Morpholin, Piperidin, Pyrrolidin, N-Methylpiperazin, Monoethanolamin, Diethanolamin, Monopropanolamin, Dipropanolamin, Methanthiol, Ethanthiol, *iso*-Propanthiol, n-Propanthiol, n-Butanthiol, *iso*-Butanthiol, *sek*-Butanthiol oder *tert*-Butanthiol.

Zur Herstellung der erfindungsgemäßen wasseremulgierbaren Polyisocyanate werden die Ausgangskomponenten a), b) und d), sowie gegebenenfalls c), e) und f) bei Temperaturen von 40 bis 180°C, vorzugsweise 50 bis 150°C, unter Einhaltung eines NCO-/OH-Äquivalentverhältnisses von 1 : 1 bis 100 : 1, vorzugsweise von 1 : 1 bis 50 : 1, besonders bevorzugt 1,5 : 1 bis 30 : 1 miteinander umgesetzt.

Die Umsetzung erfolgt in der Regel solange, bis die zu erwartende NCO-Zahl gemäß DIN 53185 von bevorzugt mindestens 1 Gew%, besonders bevorzugt mindestens 5 Gew% und ganz besonders bevorzugt mindestens 10 Gew% erreicht ist.

Die Reaktionsdauer beträgt in der Regel 10 min bis 12 Stunden, bevorzugt 15 min bis 10 Stunden, besonders bevorzugt 20 min bis 8 Stunden und ganz besonders bevorzugt 1 bis 8 Stunden.

Zur Beschleunigung der Reaktion können gegebenenfalls geeignete Katalysatoren eingesetzt werden.

Als Katalysatoren kommen die für die Adduktbildung von Isocyanatgruppen (im wesentlichen Isocyanurate) allgemein bekannte Katalysatoren in Betracht, also beispielsweise die in der EP-A-649 866 beschriebenen quarternären Ammoniumhydroxide, z.B. N,N,N-Trimethyl-N-(2-hydroxypropyl)ammoniumhydroxid, oder die aus der EP-A-182 203 bekannten quarternären Ammoniumcarboxylate, z.B. N,N,N-Trimethyl-N-(2-hydroxypropyl)ammonium-2-ethylhexanoat.

Hierbei handelt es sich um die üblichen für Urethanbildung bekannten Katalysatoren, beispielsweise um Metallcarboxylate, Metallchelate oder tertiäre Amine der in der GB-A-0 994 890 beschriebenen Art, um Alkylierungsmittel der in der US-A-3 769 318 beschriebenen Art oder um starke Säuren, wie sie in der EP-A-0 000 194 beispielhaft beschrieben sind.

Geeignete Katalysatoren sind insbesondere Zinkverbindungen, wie z. B. Zink-(II)-stearat, Zink(II)-n-actanoat, Zink-(II)-2-ethyl-I-hexanoat, Zink-(II)-naphthenat oder Zink-(II)-acetylacetonat, Zinnverbindungen, wie z. B. Zinn(II)-n-octanoat, Zinn-(II)-2-ethyl-I-hexanoat, Zinn-(II)-laurat, Dibutylzinnoxid, Dibutylzinndichlorid, Dibutylzinndiacetat, Dibutylzinndilaurat, Dibutylzinndimaleat oder Dioctylzinndiacetat, Aluminium-tri(ethylacetoacetat), Eisen-(III)-chlorid, Kaliumoctoat, Mangan-, Cobalt- oder Nickelverbindungen sowie starke Säuren, wie z. B. Trifluoressigsäure, Schwefelsäure, Chlorwasserstoff, Bromwasserstoff, Phosphorsäure oder Perchlorsäure, oder beliebige Gemische dieser Katalysatoren.

Alternativ werden auch andere metallorganische Verbindungen, d.h. solche mit mindestens einer kovalenten Metall-Kohlenstoff-Bindung, als Katalysatoren eingesetzt, beispielsweise Zirkon- Wismutorganyle.

Weiterhin können zur Katalyse der Urethanisierung Alkalimetallhydroxide und -carboxylate, besonders bevorzugt Natrium- und Kaliumhydroxid und -carboxylat, ganz besonders bevorzugt Natrium- und Kaliumhydroxid und -acetat und insbesondere Kaliumhydroxid und Kaliumacetat eingesetzt werden.

In Abhängigkeit vom eingesetzten Katalysator können sich auch in unterschiedlichem Ausmaß Allophanatgruppen bilden.

Die Reaktion kann auch in Anwesenheit von Cäsiumsalzen erfolgen, wie in der DE 10161156 beschrieben. Bevorzugte Cäsiumsalze sind dabei Verbindungen, in denen folgende Anionen eingesetzt werden: F⁻, Cl⁻, ClO-, ClO₃⁻, ClO₄⁻ , Br⁻, J-, JO₃⁻ , CN-, OCN-, NO₂⁻ , NO₃⁻, HCO₃⁻, CO₃²⁻, S²⁻, SH⁻, HSO₃⁻, SO₃²⁻, HSO₄⁻, SO₄²⁻, S₂O₂²⁻, S₂O₄²-, S₂O₅²⁻, S₂O₆²⁻, S₂O₇²⁻, S₂O₈²⁻, H₂PO₂⁻ H₂PO₄⁻, HPO₄²⁻, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)- sowie (Cₙ₊₁H₂ₙ₋₂O₄)²⁻ mit n gleich 1 bis 20, gehorcht. Ganz besonders bevorzugte Cäsiumsalze weisen als Anionen Monocarboxylate der allgemeinen Formel (CₙH₂ₙ₋₁O₂)- auf, wobei n für die Zahlen 1 bis 20 steht. Hierbei sind insbesondere zu erwähnen Formiat, Acetat, Propionat, Hexanoat und 2-Ethylhexanoat.

Die Cäsiumsalze werden in Mengen von 0,01 bis 10 mmol Cäsiumsalz pro kg lösungsmittelfreier Ansatz eingesetzt. Bevorzugt werden sie in Mengen von 0,05 bis 2 mmol Cäsiumsalz pro kg lösungsmittelfreier Ansatz verwendet.

Die Cäsiumsalze können dem Ansatz in fester Form, bevorzugt jedoch in gelöster Form zugesetzt werden. Als Lösemittel sind polare, aprotische Lösemittel oder auch protische Lösemittel geeignet.

Geeignete, wenngleich weniger bevorzugte Katalysatoren für das Verfahren sind auch solche Katalysatoren, wie sie beispielsweise in der EP-A-0 649 866 Seite 4, Zeile 7 bis Seite 5, Zeile 15 beschrieben sind.

Bevorzugte Katalysatoren für das erfindungsgemäße Verfahren sind Zinkverbindungen der obengenannten Art. Ganz besonders bevorzugt ist die Verwendung von Zink-(II)-n-octanoat, Zink-(II)-2-ethyl-I-hexanoat und/oder Zink-(II)-stearat. Ganz besonders bevorzugt ist die Verwendung von Dibutylzinndilaurat.

Diese Katalysatoren kommen, falls überhaupt, in einer Menge von 0,001 bis 5 Gew.-%, vorzugsweise 0,005 bis 1 Gew.-%, bezogen auf das Gesamtgewicht der Reaktionspartner zum Einsatz.

Die Zugabe zum Reaktionsgemisch kann dabei nach beliebigen Methoden erfolgen. So ist es beispielsweise möglich, den gegebenenfalls mitzuverwendenden Katalysator entweder der Polyisocyanatkomponente a) oder gegebenenfalls c) und/oder dem Polyetheralkohol d) und/oder der Komponente b) vor Beginn der eigentlichen Umsetzung zuzumischen. Ebenso ist es möglich, den Katalysator dem Reaktionsgemisch zu einem beliebigen Zeitpunkt während der Reaktion oder im Sinne einer zweistufigen Reaktionsführung auch im Anschluß an die Urethanisierung, d. h. wenn der einem vollständigen Umsatz von Isocyanat und Hydroxygruppen theoretisch entsprechende NCO-Gehalt erreicht ist, zuzusetzen. Um die Reaktion zu stoppen kann der Katalysator im Reaktionsgemisch thermisch oder durch Zugabe von Katalysatorgiften desaktiviert werden.

In einer bevorzugten Ausführungsform der vorliegenden Erfindung werden allophanat- und/oder urethangruppenhaltige Polyisocyanate zumindest teilweise durch Umsetzung mit hydroxyfunktionellen Verbindungen b) erhalten. Bevorzugt beträgt der Gehalt an Allophanatgruppen bei derartigen erfindungsgemäßen Polyisocyanaten (berechnet als C₂N₂HO₃ = 101 g/mol) mindestens 15 Gew%.

In einer weiteren bevorzugten Ausführungsform der vorliegenden Erfindung beträgt der Gehalt an Oxadiazintriongruppen bei den erfindungsgemäßen Polyisocyanaten (berechnet als C₃N₂O₄ = 128 g/mol) nicht mehr als 0,5 Gew%.

Die erfindungsgemäßen Polyisocyanate (A) werden durch Reaktion der Komponenten a), b) und d) miteinander erhalten.

Dabei ist die molare Zusammensetzung a):b):d) pro 3 mol reaktive Isocycanatgruppen in a) in der Regel wie folgt:
b) 0, 1 - 2,9, bevorzugt 0,5 - 2,8, besonders bevorzugt 1,0 - 2,5 und insbesondere 1,3 - 2,5 mol gegenüber Isocyanat reaktive Gruppen sowie
d) 2,9 - 0,01, bevorzugt 0,05 - 2,5 und besonders bevorzugt 0,1 - 2,0 mol gegenüber Isocyanat reaktive Gruppen.

Weiterhin kann mindestens eine weitere isocyanatgruppenhaltige Verbindung c) eingesetzt werden, und zwar in Mengen von 0 bis 30 mol% bezogen auf die eingesetzten NCO-Gruppen der Komponente a).

In einer bevorzugten Ausführungsform können erfindungsgemäßen Polyisocyanate als weitere Aufbaukomponenten e) und/oder f) in folgenden Mengen enthalten (pro mol reaktive Isocyanatgruppe im Polyisocyanat (A))
e) 0 - 50 mol%, bevorzugt 5 - 40 mol% und besonders bevorzugt 10 - 30 mol% an gegenüber Isocyanat reaktiven Gruppen und/oder
f) 0 - 50 mol%, bevorzugt 5 - 40 mol% und besonders bevorzugt 10 - 30 mol% an gegenüber Isocyanat reaktiven Gruppen.

In einer bevorzugten Ausführungsform der vorliegenden Erfindung wird ein erfindungsgemäßes Polyisocyanat (A) aufgebaut aus
- mindestens einem Diisocyanat (a), bevorzugt Hexamethylendiisocyanat und/oder Isophorondiisocyanat,
- mindestens einer, bevorzugt genau einer Komponente b), unter Reaktionsbedingungen, unter denen bevorzugt Allophanate gebildet werden,
- gefolgt von einer Umsetzung mit mindestens einer, bevorzugt genau einer Verbindung d) unter Reaktionsbedingungen, unter denen bevorzugt Urethane gebildet werden.

In einer weiteren bevorzugten Ausführungsform der vorliegenden Erfindung wird ein erfindungsgemäßes Polyisocyanat (A) aufgebaut aus
- mindestens einer oxadiazintriongruppenhaltigen Verbindung a), bevorzugt auf Basis von Hexamethylendiisocyanat und/oder Isophorondiisocyanat,
- mindestens einer, bevorzugt genau einer Komponente b), unter Reaktionsbedingungen, unter denen der Oxadiazintrionring geöffnet wird, wie sie beschrieben sind in DE 102 46 512 A,
- gefolgt von einer Umsetzung mit mindestens einer, bevorzugt genau einer Verbindung d) unter Reaktionsbedingungen, unter denen bevorzugt Urethane gebildet werden.

In einer besonders bevorzugten Ausführungsform dieser beiden Ausführungsformen handelt es sich bei der Komponente b) um 2-Hydroxyethylacrylat.

Anschließend kann das so erhaltene Reaktionsgemisch mit weiterer Komponente b) und/oder mit weiterem Isocyanat, beispielsweise unumgesetztem oder zusätzlich zugegebenem a) oder Verbindung c), umgesetzt werden, wobei jedoch ein Teil der NCO-Gruppen unumgesetzt bleibt.

Die Bildung des Addukts aus isocyanatgruppenhaltiger Verbindung und der Verbindung, die gegenüber Isocyanatgruppen reaktive Gruppen enthält erfolgt in der Regel durch Mischen der Komponenten in beliebiger Reihenfolge, gegebenenfalls bei erhöhter Temperatur.

Bevorzugt wird dabei die Verbindung, die gegenüber Isocyanatgruppen reaktive Gruppen enthält, zu der isocyanatgruppenhaltigen Verbindung zugegeben, bevorzugt in mehreren Schritten.

Besonders bevorzugt wird die isocyanatgruppenhaltige Verbindung vorgelegt und die Verbindungen, die gegenüber Isocyanat reaktive Gruppen enthalten, zugegeben. Insbesondere wird zunächst die isocyanatgruppenhaltige Verbindung a) vorgelegt, daraufhin b) und anschließend d) zugegeben oder zunächst die isocyanatgruppenhaltige Verbindung a) vorgelegt, daraufhin d) und anschließend b) zugegeben. Nachfolgend können gegebenenfalls gewünschte weitere Komponenten zugegeben werden.

Selbstverständlich können b) und d) auch im Gemisch miteinander zugegeben werden.

Gemäß einer weiteren Ausführungsform ist es möglich Addukte (A1) aus a) und b), sowie gegebenenfalls c), e) und/oder f) und Addukte (A2) aus a) und d), sowie gegebenenfalls c), e) und/oder f) getrennt voneinander herzustellen und die so erhältlichen Komponenten (A1) und (A2) später, beispielsweise zur Herstellung einer Lackformulierung oder Dispersion, miteinander unter Bildung von Addukten (A) zur Reaktion zu bringen, insbesondere durch Reaktion mit Verbindungen e).

In der Regel wird die Reaktion bei Temperaturen zwischen 0 und 150 °C, bevorzugt zwischen 20 bis 130 °C und besonders bevorzugt zwischen 25 und 120°C und insbesondere zwischen 40 und 100 °C durchgeführt.

Die Umsetzung wird im allgemeinen in Substanz, Lösung oder Dispersion bevorzugt bei Normaldruck vorgenommen.

Bevorzugt wird dabei unter wasserfreien Bedingungen gearbeitet.
Wasserfrei bedeutet dabei, daß der Wassergehalt im Reaktionssystem nicht mehr als 5 Gew% beträgt, bevorzugt nicht mehr als 3 Gew% und besonders bevorzugt nicht mehr als 1 Gew%.

Bevorzugt wird die Reaktion in Gegenwart mindestens eines geeigneten Inertgases durchgeführt, z.B. Stickstoff, Argon, Helium.

Die Reaktion kann auch in Gegenwart eines inerten Solvens durchgeführt werden, z.B. Aceton, *Iso*-butyl-methylketon, Ethylmethylketon, Toluol, Xylol, Butylacetat oder Ethoxyethylacetat. Bevorzugt wird die Reaktion jedoch in Abwesenheit eines Solvens durchgeführt.

Die Umsetzung wird üblicherweise beendet, wenn die mit NCO-Gruppen reaktiven Gruppen in der Reaktionsmischung praktisch quantitativ abreagiert sind.

Vorzugsweise beträgt der NCO-Gehalt gemäß DIN 53185 der erfindungsgemäßen Polyisocyanate (A) bis zu 25 Gew%.

Der Reaktionsfortschritt der Polyisocyanatbildung wird zweckmäßigerweise per Gelpermeationschromatographie (GPC) oder durch Bestimmung des NCO-Gehaltes der Reaktionsmischung verfolgt.

Die Umsetzung wird üblicherweise beendet, wenn die mit Isocyanatgruppen reaktiven Ausgangsverbindungen praktisch vollständig umgesetzt, das heißt per GPC nicht mehr detektierbar sind.

Die Beendigung der Umsetzung erfolgt gegebenenfalls durch Zusatz von Desaktivatoren. Als Desaktivatoren eignen sich beispielsweise anorganische oder organische Säuren, die entsprechenden Säurehalogenide und Alkylierungsmittel. Beispielhaft genannt seien Phosphorsäure, Monochloressigsäure, Dodecylbenzolsulfonsäure, Benzoylchlorid, Dimethylsulfat und vorzugsweise Dibutylphosphat sowie Di-2-ethylhexylphosphat. Die Desaktivierungsmittel können in Mengen von 1 bis 200 Mol-%, vorzugsweise 20 bis 100 Mol-%, bezogen auf die Mole an Katalysator, eingesetzt werden.

Besonders bevorzugte Polyisocyanate (A) sind solche mit einem über Gelpermeationschromatographie bestimmbaren Allophanatanteil von 0,5 bis 100 mol %, ganz besonders bevorzugt 5 bis 65 mol % und insbesondere 10 bis 50 mol% bezogen auf das niedermolekularste Allophanatmolekül.

In einer weiteren bevorzugten Ausführungsform der Erfindung wird mindestens ein Di- oder Polyisocyanat a) in einem ersten Schritt mit mindestens einer Verbindung b) unter Reaktionsbedingungen umgesetzt, unter denen im wesentlichen eine Urethanbildung abläuft. Das so erhaltene urethangruppenhaltige Polyisocyanat kann anschließend in einem zweiten Schritt mit dem gleichen Di- oder Polyisocyanat a) und/oder mit einem anderen Di- oder Polyisocyanat c) unter Reaktionsbedingungen umgesetzt, werden, unter denen im wesentlichen eine Allophanatbildung abläuft. Das so erhaltene allophanatgruppenhaltige Polyisocyanat kann anschließend in einem dritten Schritt mit mindestens einer Verbindung b) umgesetzt werden.

Besonders bevorzugt wird bei dieser Ausführungsform der vorliegenden Erfindung als Di- oder Polyisocyanat a) ein monomeres Diisocyanat, bevorzugt Hexamethylendiisocyanat oder Isophorondiisocyanat, mit einer Verbindung b) unter Urethanisierungsbedingungen umgesetzt und dieses Reaktionsprodukt anschließend mit dem gleichen monomeren Diisocyanat unter Allophanatisierungsbedingungen umgesetzt. Anschließend kann dieses Reaktionsprodukt mit mindestens einer Verbindung d) umgesetzt werden.

Häufig sind Urethanisierungs- und Allophanatisierungsbedingungen gleich, so daß zwischen den ersten beiden Reaktionsschritten nicht unterschieden wird.

Anschließend kann eine weitere Umsetzung mit weiteren Komponenten c), e) und/oder f) erfolgen.

Eine weitere bevorzugte erfindungsgemäße Ausführungsform besteht darin, eine isocyanuratgruppenhaltige Verbindung a) mit mindestens einer Verbindung b) und mindestens einer Verbindung d) umzusetzen. Diese Umsetzung kann wahlweise nacheinander, also zunächst die Umsetzung mit der Verbindung b) und anschließend mit Verbindung d) oder zunächst die Umsetzung mit der Verbindung d) und anschließend mit Verbindung b), oder bevorzugt parallel, also gleichzeitige Umsetzung mit einem Gemisch der Verbindungen b) und d), durchgeführt werden.

"Urethanisierungsbedingungen" bzw. "Allophanatisierungsbedingungen" bedeutet hier, daß bei den gewählten Reaktionsbedingungen, beispielsweise durch Wahl von Reaktionspartnern, Katalysator und Temperatur, im wesentlichen Urethan- bzw. Allophanatgruppen gebildet werden. "Im wesentlichen" bedeutet dabei, daß mehr als 50% aller gebildeten Gruppen, also Isocyanurat-, Biuret-, Urethan-, Allophanat-, Uretdion-, Oxadiazintrion-, Iminooxadiazintrion- und/oder Carbodiimidgruppen, die gewünschten sind, bevorzugt mehr als 66%, besonders bevorzugt mehr als 75% und ganz besonders bevorzugt mehr als 85%.

Im Produkt enthaltene freie Isocyanatgruppen können, falls gewünscht, noch blockiert werden.

Die Isocyanatgruppen der Di- oder Polyisocyanate können auch in verkappter Form vorliegen. Als Verkappungsmittel für NCO-Gruppen eignen sich z.B. Oxime, Phenole, Imidazole, Pyrazole, Pyrazolinone, Triazole, Diketopiperazine, Caprolactam, Malonsäureester oder Verbindungen, wie sie genannt sind in den Veröffentlichungen von Z.W. Wicks, Prog. Org. Coat. 3 (1975) 73 - 99 und Prog. Org. Coat 9 (1981), 3 -28, von D.A. Wicks und Z.W. Wicks, Prog. Org. Coat. 36 (1999), 148 - 172 und Prog. Org. Coat. 41 (2001), 1-83 sowie in Houben-Weyl, Methoden der Organischen Chemie, Bd. XIV/2, 61 ff. Georg Thieme Verlag, Stuttgart 1963.

Unter Verkappungs- bzw. Blockierungsmitteln werden dabei Verbindungen verstanden, die Isocyanatgruppen in blockierte (verkappte bzw. geschützte) Isocyanatgruppen umwandeln, die dann unterhalb der sogenannten Deblockierungstemperatur nicht die üblichen Reaktionen einer freien Isocyanatgruppe zeigen. Solche Verbindungen mit blockierten Isocyanatgruppen kommen üblicherweise in Dual-Cure-Beschichtungsmitteln oder in Pulverlacken zur Anwendung, die über Isocyanatgruppenhärtung endgehärtet werden.

Bevorzugte Blockierungsmittel sind solche, die mindestens eine der folgenden Gruppen enthalten: Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

Imidazolische Gruppen als gegenüber Isocyanatgruppen reaktive Gruppen, hier kurz als "Imidazole" bezeichnet, sind beispielsweise bekannt aus WO 97/12924 und EP 159117, Triazole aus US 4482721, CH-acide cyclische Ketone sind beispielsweise beschrieben in DE-A1 102 60 269, dort besonders in Absatz [0008] und bevorzugt in den Absätzen [0033] bis [0037], besonders bevorzugt Cyclopentanon-2-carbonsäureester und insbesondere Cyclopentanon-2-carbonsäureethylester.

Bevorzugt Imidazole sind beispielsweise solche Imidazole, die neben der freien NH-Gruppe noch eine weitere funktionelle Gruppe enthalten, wie z.B. -OH, -SH, -NH-R,-NH2, -CHO, wie z.B., 4-(Hydroxymethyl) imidazol, 2-Mercapto-imidazol, 2-Aminoimidazol, 1-(3-Aminopropyl) imidazol, 4,5-Diphenyl-2-Imidazolethiol, Histamin, 2-Imidazol-carboxaldehyd, 4-Imidazol carbonsäure, 4,5-Inmidazol-dicarbonsäure, L-Histidin, L-Carnosine, und 2, 2'-Bis-(4,5 dimethyl-imidazol).

Geeignete Triazole sind 3-Amine-1,2,4 Triazol, 4-Amino-1,2,4 Triazol, 3,5 Diamino-1,2,4 Triazol, 1 H-1,2,4 Triazol-3-Thiol, 5-Methyl-1H-1,2,4 Triazol-3-Thiol und 3-Amino-5-Mercapto-1,2,4-Triazol.

Bevorzugt sind Phenole, Oxime, N-Hydroxyimide, Lactame, imidazole, Triazole, Malonsäureester und Alkylacetonate, besonders bevorzugt sind Lactame, Phenole, Imidazole, Triazole und Malonsäureester und ganz besonders bevorzugt sind Phenole.

Die erfindungsgemäßen Polyisocyanate und Polyurethandispersionen können bevorzugt als Beschichtungsmassen verwendet werden. Dazu werden sie mit Verbindungen (E) und, falls erforderlich, mit den Komponenten (C) und gegebenenfalls (D) versetzt.

Als Photoinitiatoren (C) können dem Fachmann bekannte Photoinitiatoren verwendet werden, z.B. solche in "Advances in Polymer Science", Volume 14, Springer Berlin 1974 oder in K. K. Dietliker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise Phosphinoxide, Benzophenone, α-Hydroxy-alkyl-aryl-ketone, Thioxanthone, Anthrachinone, Acetophenone, Benzoine und Benzoinether, Ketale, Imidazole oder Phenylglyoxylsäuren und Gemische davon.

Phosphinoxide sind beispielsweise Mono- oder Bisacylphosphinoxide, wie z.B. Irgacure® 819 (Bis(2,4,6-Trimethylbenzoyl)phenylphosphinoxid), wie sie z.B. in EP-A 7 508, EP-A 57 474, DE-A 196 18 720, EP-A 495 751 oder EP-A 615 980 beschrieben sind, beispielsweise 2,4,6-Trimethylbenzoyldiphenylphosphinoxid (Lucirin^{®} TPO), Ethyl-2,4,6-trimethylbenzoylphenylphosphinat oder Bis(2,6-dimethoxybenzoyl)-2,4,4-trimethylpentylphosphinoxid,

Benzophenone sind beispielsweise Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon,

α-Hydroxy-alkyl-aryl-ketone sind beispielsweise 1-Benzoylcyclohexan-1-ol (1-Hydroxy-cyclohexyl-phenylketon), 2-Hydroxy-2,2-dimethylacetophenon (2-Hydroxy-2-methyl-1-phenyl-propan-1-on), 1-Hydroxyacetophenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält (Esacure® KIP 150)

Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Di-isopropylthioxanthon, 2,4-Dichlorthioxanthon oder Chloroxanthenon,

Anthrachinone sind beispielsweise β-Methylanthrachinon, *tert*-Butylanthrachinon, Anthrachinoncarbonylsäureester, Benz[de]anthracen-7-on, Benz[a]anthracen-7,12-dion, 2-Methylanthrachinon, 2-Ethylanthrachinon, 2-*tert*-Butylanthrachinon, 1-Chloranthrachinon oder 2-Amylanthrachinon,

Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on oder 2-Benzyl-2-dimethylamino-1-(4-morpholinophenyl)-butan-1-on,

Benzoine und Benzoinether sind beispielsweise 4-Morpholinodeoxybenzoin, Benzoin, Benzoin-iso-butylether, Benzoin-tetrahydropyranylether, Benzoin-methylether, Benzoin-ethylether, Benzoin-butylether, Benzoin-iso-propylether oder 7-H-Benzoin-methylether oder

Ketale sind beispielsweise Acetophenondimethylketal, 2,2-Diethoxyacetophenon, oder Benzilketale, wie Benzildimethylketal.

Phenylglyoxylsäuren sind beispielsweise in DE-A 198 26 712, DE-A 199 13 353 oder WO 98/33761 beschrieben.

Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion. Typische Gemische umfassen beispielsweise 2-Hydroxy-2-Methyl-1-phenyl-propan-2-on und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Des weiteren sind auch Cer(IV)-Verbindungen als Initiatoren einsetzbar.

Cer(IV)-Verbindungen in diesem Sinne sind solche Verbindungen, die mindestens ein Ce⁴⁺-Kation mit beliebigen Gegenionen enthalten.

Als Gegenionen kommen in Frage F-, Cl-, CIO-, ClO₃-, ClO₄-, Br-, J-, JO₃-, CN-, OCN-, SCN-, NO₂-, NO₃-, HCO₃-, CO₃²⁻, S²⁻, SH-, HSO₃-, SO₃²⁻, HSO₄-, SO₄²⁻, S₂O₂²⁻, S₂O₄²⁻, S₂O₅²⁻, S₂O₆2⁻, S₂O₇²⁻, S₂O₈²⁻, H₂PO₂-, H₂PO₄-, HPO₄²⁻, PO₄³⁻, P₂O₇⁴⁻, Dithiocarbamat, Salicylat, (OCₚH₂ₚ₊₁)-, (CₚH₂ₚ₋₁O₂)-, (CₚH₂ₚ₋₃O₂)- sowie (Cₚ₊₁H₂ₚ₋₂O₄)²⁻, wobei p für die Zahlen 1 bis 20 steht, Methansulfonat (CH₃SO₃⁻), Trifluormethansulfonat (CF₃SO₃-), Toluolsulfonat (CH₃C₆H₄SO₃-), Benzolsulfonat (C₆H₅SO₃-), Hydroxid (OH-), Anionen aromatischer Säuren wie Benzoesäure, Phtalsäure, und 1,3-Dicarbonylverbindungen.

Weiterhin genannt seien Carboxylate, insbesondere sind zu erwähnen Formiat, Acetat, Propionat, Hexanoat und 2-Ethylhexanoat sowie Oxalat, Acetylacetonat, Acrylat und Methacrylat, bevorzugt Formiat, Acetat, Propionat, Oxalat, Acetylacetonat, Acrylat und Methacrylat.

Diese Salze können auch als Hydrate vorliegen, die gleichermaßen geeignet sind.

Bevorzugte Cer(IV)-Verbindungen sind Ammoniumhexanitratocerat(IV) (Cer(IV)ammoniumnitrat, (NH₄)₂[Ce(NO₃)₆]), Natriumhexanitratocerat(IV) (Na₂[Ce(NO₃)₆], Kaliumhexanitratocerat(IV) (K₂[Ce(NO₃)₆]), Cer(IV)ammoniumsulfat (Ce(NH₄)₂(NO₃)₆)), Cer(IV)hydroxid, Cer(IV)isopropylat-Isopropanol Komplex, Cer(IV)oxid (CeO₂) und Cer(IV)sulfat (Ce(SO₄)₂).

Selbstverständlich ist es auch möglich, Cer-Verbindungen einer niedrigeren Oxidationsstufe einzusetzen und diese in der Beschichtungmasse mit Hilfe eines Oxidationsmittels in eine Cer(IV)-Verbindung zu überführen, insbesondere Cer(III)-Verbindungen. Bevorzugt als Cer(III)-Verbindungen sind Cer(III)acetat, Cer(III)acetat Hydrat, Cer(III)acetylacetonat, Cer(III)acetylacetonat Hydrat, Cer(III)bromid, Cer(III)carbonat, Cer(III)carbonat Hydrat, Cer(III)chlorid (CeCl₃), Cer(III)chlorid Heptahydrat, Cer(III)-ethylhexanoat und dessen Lösungen oder Dispersionen in Mineralöl oder Naphta (Octa Soliogen Cerium® 6 und 10 d. Fa. Borcherts, Monheim, Deutschland, CAS-Nummer [58797-01-4]), Cer(III)fluorid, Cer(III)nitrat (Ce(NO₃)₃), Cer(III)nitrat Hexahydrat, Cer(III)oxalat, Cer(III)sulfat, Cer(III)sulfat Octahydrat, Cer(III)oxid oder Cer(III)acrylat.

Als Oxidationsmittel kommen dabei erfindungsgemäß solche in Frage, die ihrerseits keine Polymerisation auslösen, d.h. keine Radikalbildner sind.

Bevorzugt ist es jedoch, die Cer-Verbindungen als Cer(IV)-Verbindungen einzusetzen.

Die Cer-Verbindungen können auch als Komplexe eingesetzt werden, beispielsweise komplexiert mit amin-, schwefel-, stickstoff-, phosphor- und/oder sauerstoffhaltigen Liganden oder als Cyclopentadienylkomplexe. Beispiele für Liganden sind Mercaptane, Sulfide, primäre, sekundäre oder tertiäre Amine, primäre, sekundäre oder tertiäre Phosphine, Alkohole und Ether sowie Cyclopentadien, Benzol, Furan, Pyrrol, Pyridin und Thiophen, sowie deren Derivate, sowie Komplexbildner wie Ethanolamine. Ethylendiamintetraacetat, Ethylendiamintriacetat, Nitrilotriessigsäure

Als weitere lacktypische Additive (D) können beispielsweise Antioxidantien, Stabilisatoren, Aktivatoren (Beschleuniger), Füllmittel, Pigmente, Farbstoffe, antistatische Agentien, Flammschutzmittel, Verdicker, thixotrope Agentien, oberflächenaktive Agentien, Viskositätsmodifikatoren, Plastifizierer oder Chelatbildner verwendet werden.

Als Beschleuniger für die thermische Nachhärtung kann z.B. Zinnoctoat, Zinkoctoat, Dibutylzinnlaurat oder Diaza[2.2.2]bicyclooctan verwendet werden.

Weiterhin können ein oder mehrere photochemisch und/oder thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Di-iso-propylpercarbonat, tert Butylperoktoat oder Benzpinakol, sowie beispielsweise solche thermisch aktivierbare Initiatoren, die eine Halbwertszeit bei 80°C von mehr als 100 Stunden aufweisen, wie Di-t-Butylperoxid, Cumolhydroperoxid, Dicumylperoxid, t-Butylperbenzoat, silylierte Pinakole, die z. B. unter dem Handelsnamen AD-DID 600 der Firma Wacker kommerziell erhältlich sind oder Hydroxylgruppen-haltige Amin-N-Oxide, wie 2,2,6,6-Tetramethylpiperidin-N-oxyl, 4-Hydroxy-2,2,6,6-Tetramethylpiperidin-N-oxyl.
Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie β-Diketone verwendet werden.

Geeignete Füllstoffe umfassen Silikate, z. B. durch Hydrolyse von Siliciumtetrachlorid erhältliche Silikate wie Aerosil^{®} der Fa. Degussa, Kieselerde, Talkum, Aluminiumsilikate, Magnesiumsilikate, Calciumcarbonate.

Geeignete Stabilisatoren umfassen typische UV-Absorber wie Oxanilide, Triazine und Benzotriazol (letztere erhältlich als Tinuvin^{®} -Marken der Ciba-Spezialitätenchemie) und Benzophenone. Diese können allein oder zusammen mit geeigneten Radikalfängem, beispielsweise sterisch gehinderten Aminen wie 2,2,6,6-Tetramethylpiperidin, 2,6-Di-tert.-butylpiperidin oder deren Derivaten, z.B. Bis-(2,2,6,6-tetra-methyl-4-piperidyl)sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Bezogen auf das Gesamtgewicht kann die fertige Polyurethandispersion 0-10 Gew% (C) enthalten, bevorzugt 1-8 Gew%, besonders bevorzugt 2-7 Gew% und insbesondere 3-5 Gew%, sowie

Bezogen auf das Gesamtgewicht kann die fertige Dispersion 0-50 Gew% der Komponenten (D) enthalten, bevorzugt 5-40 Gew%, besonders bevorzugt 10 -30 Gew% und insbesondere 15-25 Gew%.

Als Reaktionspartner (E) für die erfindungsgemäßen wasserdispergierbaren Polyisocyanate, die freie Isocyanatgruppen aufweisen, sind Bindemittel einsetzbar, die gegenüber Isocyanat reaktive Gruppen aufweisen.

Solche Bindemittel sind beispielsweise Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, Polyurethanmodifizierte Alkydharze; Fettsäuremodifizierte Polyesterpolyurethanpolyole, Kopolymerisate mit Allylethern, Propfpolymerisate aus den genannten Stoffgruppen mit z.B. unterschiedlichen Glasübergangstemperaturen, sowie Mischungen der genannten Bindemittel. Bevorzugt sind Polyacrylatpolyole, Polyesterpolyole und Polyetherpolyole. Auch können zusätzlich Melaminformaldehyd-Harze zugegeben werden.

Im Rahmen der Erfindung werden bevorzugt Polyacrylatpolyole, Polyesterole und/oder Polyetherole eingesetzt, besonders bevorzugt solche mit einem Molekulargewicht Mₙ von mindestens 1000 g/mol.

Bei den Polyacrylatpolyole handelt es sich beispielsweise um solche, die im hydroxygruppentragende Monomere einpolymerisiert enthalten, beispielsweise solche, wie oben unter b) aufgeführt, bevorzugt 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat, meist im Gemisch mit anderen polymerisierbaren, bevorzugt radikalisch polymerisierbaren Monomeren, bevorzugt um solche, welche zu mehr als 50 Gew.-% aus C₁-C₂₀-Alkyl(meth)acrylat, Vinylaromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymeren, die zu mehr als 60 Gew%.-% aus C₁-C₁₀-Alkyl(meth)acrylaten, Styrol oder deren Mischungen bestehen.

Darüber können die Polymeren hydroxyfunktionelle Monomere entsprechend dem obigen Hydroxygruppengehalt und gegebenenfalls weitere Monomere enthalten, z.B. ethylenisch ungesättigte Säuren, insbesondere Carbonsäuren, Säureanhydride oder Säureamide.

Weitere Polymere sind z.B. Polyesterole, wie sie durch Kondensation von Polycarbonsäuren, insbesondere Dicarbonsäuren mit Polyolen, insbesondere Diolen erhältlich sind.

Polyesterpolyole, sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachiorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure.

Als mehrwertige Alkohole kommen zur Herstellung der Polyesterole in Betracht 1,2-Propandiol, Ethylenglykol, 2,2-Dimethyl-1,2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 2000, Poly-1,3-propandiol mit einer Molmasse zwischen 134 und 1178, Pol-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-Propandiol, 2-Methyl-1,3-Propandiol, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12- diol. Weiterhin bevorzugt ist Neopentylglykol.

Ferner kommen auch Polycarbonat-Diole, wie sie z.B. durch Umsetzung von Phosgen mit einem Überschuß von den als Aufbaukomponenten für die Polyesterpolyole genannten niedermolekularen Alkohole erhalten werden können, in Betracht.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, gamma-Butyrolacton und/oder Methyl-ε-caprolacton, 4-Hydroxybenzoesäure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Bei den Polymeren kann es sich natürlich auch um Verbindungen mit primären der sekundären Aminogruppen handeln.

In einer besonders bevorzugten Ausführungsform liegen die Polyolkomponenten als Dispersionen vor, beispielsweise als Primär- oder als Sekundärdispersionen. Beispielsweise kann es sich um solche dispergiert vorliegenden Polyolkomponenten handeln, wie sie beschrieben sind in DE-A1 42 06 044. S. 3, Z. 1 bis S. 4, Z. 30, worauf hiermit ausdrücklich Bezug genommen wird.

Die Molmassen unterliegen grundsätzlich keiner Einschränkung.

Derartige Polyacrylatpolyole, Polyesterole und/oder Polyetherole weisen in Sekundärdispersionen bevorzugt ein Molekulargewicht Mₙ von mindestens 500, besonders bevorzugt mindestens 1000, ganz besonders bevorzugt mindestens 2000 auf. Das Molekulargewicht Mₙ kann beispielsweise bis 200.000, bevorzugt bis zu 100.000, besonders bevorzugt bis zu 80.000 und ganz besonders bevorzugt bis zu 50.000 g/mol betragen. Bei Acrylatdispersionen kann Mₙ auch bis zu 1.000.000 betragen.

Im Fall von Primärdispersionen eines Polymerisats olefinisch ungesättiger Monomere wie Polyacrylaten kann das Molekulargewicht beispielsweise bis zu 1.500.000 g/mol, bevorzugt nicht über 1.000.000, besonders bevorzugt nicht über 500.000 g/mol betragen.

Die Dispersionen werden zum Beispiel mit ionischen Gruppen oder in ionische Gruppen überführbare Gruppen dispergierbar gemacht. Bevorzugt sind Carbonsäure- Sulfonsäure-, respektive Carboxylat- und/oder Sulfonat-Gruppen.

Es kann eine Neutralisation der Dispersionen der erfindungsgemäßen Polyisocyanate und der genannten Bindemittel erfolgen, bevorzugt mit Aminen, bevorzugt mit Dimethylethanolamin; Triethylamin; Ethyldiisopropylamin, Aminomethylpropanol oder Ammoniak. Ammoniak ist bei Primärdispersionen besonders bevorzugt.

Des weiteren kann gegebenenfalls mindestens eine Verbindung (F) mit mindestens einer, bevorzugt genau einer gegenüber Isocyanat reaktiven Gruppe und mindestens einer radikalisch polymerisierbaren ungesättigten Gruppe.

Bevorzugt weisen die Komponenten (F) ein Molgewicht unter 10000 g/mol auf, besonders bevorzugt unter 5000 g/mol, ganz besonders bevorzugt unter 4000 gimoi und insbesondere unter 3000 g/mol. Spezielle Verbindungen (F) weisen ein Molgewicht unter 1000 oder sogar unter 600 g/mol auf.

Komponenten (F) können z.B. Monoester von α,β-ungesättigten Carbonsäuren, wie Acrylsäure, Methacrylsäure, Crotonsäure, Itaconsäure, Fumarsäure, Maleinsäure, Acrylamidoglykolsäure, Methacrylamidoglykolsäure oder Vinylether mit Di- oder Polyolen sein, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-Ethandiol, Dipropylenglykol, Triethylenglykol, Tetraethylenglykol, Pentaethylenglykol, Tripropylenglykol, 1,2-, 1,3- oder 1,4-Butandiol, 1,5-Pentandiol, Neopentylglykol, 1,6-Hexandiol, 2-Methyl-1,5-pentandiol, 2-Ethyl-1,4-butandior, 1,4-Dimethylolcyclohexan, 2,2-Bis(4-hydroxycyclohexyl)propan, Glycerin, Trimethylolethan, Trimethylolpropan, Trimethylolbutan, Pentaerythrit, Ditrimethylolpropan, Erythrit, Sorbit, Poly-THF mit einem Molgewicht zwischen 162 und 2000, Poly-1,3-propandiol mit einem Molgewicht zwischen 134 und 400 oder Polyethylenglykol mit mit einem Molgewicht zwischen 238 und 458. Weiterhin können auch Ester oder Amide der (Meth)acrylsäure mit Aminoalkoholen z. B. 2-Aminoethanol, 2-(Methylamino)-ethanol, 3-Amino-1-propanol, 1-Amino-2-propanol oder 2-(2-Aminoethoxy)ethanol, 2-Mercaptoethanol oder Polyaminoalkane, wie Ethylendiamin oder Diethylentriamin, oder Vinylessigsäure verwendet werden.

Bevorzugt verwendet werden 2-Hydroxyethyl(meth)acrylat, 2- oder 3-Hydroxypropyl-(meth)acrylat, 1,4-Butandiolmono(meth)acryfat, Neopentylglykolmono(meth)acrylat, 1,5-Pentandiolmono(meth)acrylat, 1,6-Hexandiolmono(meth)acrylat, Glycerinmono- und di(meth)acrylat, Trimethylolpropanmono- und di(meth)acrylat, Pentaerythritmono-, -di- und -tri(meth)acrylat sowie 4-Hydroxybutylvinylether, 2-Aminoethyl(meth)acrylat, 2-Aminopropyl(meth)acrylat, 3-Aminopropyl(meth)acrylat, 4-Aminobutyl(meth)acrylat, 6-Aminohexyl(meth)acrylat, 2-Thioethyl(meth)acrylat, 2-Aminoethyl(meth)acrylamid, 2-Amiriopropyl(meth)acrylamid, 3-AminopropyP(meth)acrylamid, 2-Hydroxyethyl(meth)-acrylamid, 2-Hydroxypropyl(meth)acrylamid oder 3-Hydroxypropyl(meth)acrylamid. Besonders bevorzugt sind 2-Hydroxyethylacrylat, 2-Hydroxyethylmethacrylat, 2- oder 3-Hydroxypropylacrylat, 1,4-Butandiolmonoacrylat, 3-(Acryloyloxy)-2-hydroxypropyl-(meth)acrylat sowie die Monoacrylate von Polyethylenglykol der Molmasse von 106 bis 238.

Die Beschichtung der Substrate mit den erfindungsgemäßen Beschichtungsmassen erfolgt nach üblichen, dem Fachmann bekannten Verfahren, wobei man wenigstens eine erfindungsgemäße Dispersion oder Lackformulierung auf das zu beschichtende Substrat in der gewünschten Stärke aufbringt und die flüchtigen Bestandteile der Dispersionen, gegebenenfalls unter Erhitzen, entfernt. Dieser Vorgang kann gewünschtenfalls ein- oder mehrfach wiederholt werden. Das Aufbringen auf das Substrat kann in bekannter Weise, z. B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1000 g/m² und vorzugsweise 10 bis 200 g/m².

Weiterhin wird ein Verfahren zum Beschichten von Substraten offenbart, bei dem man das erfindungsgemäße Polyisocyanat, die in Form von beispielsweise Polyurethandispersionen, Beschichtungsmassen oder Lackformulierungen, gegebenenfalls mit weiteren lacktypischen Additiven und thermisch härtbaren Harzen versetzt, auf das Substrat aufbringt und gegebenenfalls trocknet, mit Elektronenstrahlen oder UV Belichtung unter sauerstoffhaltiger Atmosphäre oder bevorzugt unter Inertgas härtet, gegebenenfalls bei Temperaturen bis zur Höhe der Trocknungstemperatur und anschließend bei Temperaturen bis zu 160°C, bevorzugt zwischen 60 und 160 °C, thermisch behandelt.

Das Verfahren zum Beschichten von Substraten kann auch so durchgeführt werden, daß nach dem Aufbringen der erfindungsgemäßen Polyisocyanate in Form von beispielsweise Polyurethandispersionen, Beschichtungsmassen oder Lackformulierungen zunächst bei Temperaturen bis zu 160°C, bevorzugt zwischen 60 und 160 °C, thermisch behandelt und anschließend mit Elektronenstrahlen oder UV Belichtung unter Sauerstoff oder bevorzugt unter Inertgas gehärtet wird.

Die Härtung der auf dem Substrat gebildeten Filme kann gewünschtenfalls ausschließlich thermisch erfolgen. Im allgemeinen härtet man die Beschichtungen jedoch sowohl durch Bestrahlung mit energiereicher Strahlung als auch thermisch.

Die Härtung kann auch zusätzlich oder anstelle der thermischen Härtung durch NIR-Strahlung erfolgen, wobei als NIR-Strahlung hier elektromagnetische Strahlung im Wellenlängenbereich von 760 nm bis 2,5µm, bevorzugt von 900 bis 1500 nm bezeichnet ist.

Gegebenenfalls kann, wenn mehrere Schichten des Beschichtungsmittels übereinander aufgetragen werden, nach jedem Beschichtungsvorgang eine NIR-, thermische und/oder Strahlungshärtung erfolgen.

Als Strahlungsquellen für die Strahlungshärtung geeignet sind z.B. Quecksilber-Niederdruckstrahler, -Mitteldruckstrahler mit Hochdruckstrahler sowie Leuchtstoffröhren, Impulsstrahler, Metallhalogenidstrahler, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm strahlt, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3000 mJ/cm².

Selbstverständlich sind auch mehrere Strahlungsquellen für die Härtung einsetzbar, z.B. zwei bis vier.
Diese können auch in jeweils unterschiedlichen Wellenlängebereichen strahlen.

Die Bestrahlung kann gegebenenfalls auch unter Ausschluß von Sauerstoff, z.B. unter Inertgas-Atmosphäre, durchgeführt werden. Als Inertgase eignen sich vorzugsweise Stickstoff, Edelgase, Kohlendioxid, oder Verbrennungsgase. Desweiteren kann die Bestrahlung erfolgen, indem die Beschichtungsmasse mit transparenten Medien abgedeckt wird. Transparente Medien sind z. B. Kunststofffolien, Glas oder Flüssigkeiten, z. B. Wasser. Besonders bevorzugt ist eine Bestrahlung in der Weise, wie sie in der DE-A 199 57 900 beschrieben ist.

Ein weiterer Gegenstand der Erfindung ist ein Verfahren zur Beschichtung von Substraten, wobei man
i) ein Substrat mit einer Lackformulierung oder Dispersion, wie zuvor beschrieben, beschichtet,
ii) flüchtige Bestandteile der Lackformulierung oder Dispersion zur Filmbildung unter Bedingungen entfernt, bei denen der Initiator (C) im wesentlichen noch keine freien Radikale ausbildet,
iii) gegebenenfalls den in Schritt ii) gebildeten Film mit energiereicher Strahlung bestrahlt, wobei der Film vorgehärtet wird, und anschließend gegebenenfalls den mit dem vorgehärteten Film beschichteten Gegenstand mechanisch bearbeitet oder die Oberfläche des vorgehärteten Films mit einem anderen Substrat in Kontakt bringt,
iv) dem Film thermisch endhärtet

Dabei können die Schritte iv) und iii) auch in umgekehrter Reihenfolge durchgeführt, d. h. der Film kann zuerst thermisch und dann mit energiereicher Strahlung gehärtet werden.

Die erfindungsgemäßen Polyisocyanate, Beschichtungsmassen und Lackformulierungen eignen sich besonders zum Beschichten von Substraten wie Holz, Papier, Textil, Leder, Vlies, Kunststoffoberflächen, Glas, Keramik, mineralischen Baustoffen, wie Zement-Formsteine und Faserzementplatten, oder Metallen oder beschichteten Metallen, bevorzugt von Kunststoffen oder Metallen, insbesondere in Form von Folien.

Die erfindungsgemäßen Polyisocyanate, Lackformulierunge oder Dispersionen eignen sich als oder in Außenbeschichtungen, also solche Anwendungen, die dem Tageslicht ausgesetzt sind, bevorzugt von Gebäuden oder Gebäudeteilen, Innenbeschichtungen, Straßenmarkierungen, Beschichtungen auf Fahrzeugen und Flugzeugen. Insbesondere werden die erfindungsgemäßen Lackformulierungen oder Dispersionen als oder in Automobilklar- und -decklacke(n) eingesetzt.

Besonders eignen sie sich als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolacklerung eingesetzt werden. Ganz besonders geeignet sind die Beschichtungsmittel für Anwendungen, in denen eine besonders hohe Applikationssicherheit, Außenwitterungsbeständigkeit, Optik, Lösemittel- und/oder Chemikalienfestigkeit gefordert werden.

Die folgenden Beispiele sollen die Eigenschaften der Erfindung erläutern, ohne sie aber einzuschränken.

### Beispiele

Als "Teile" seien in dieser Schrift, wenn nicht anders angegeben, "Gewichtsteile" verstanden.

Wenn nicht anders angegeben wird die in dieser Schrift angegebene Viskosität bei 23 °C gemäß DIN EN ISO 3219/A.3 gemessen.

### Polyether A:

Auf Methanol gestartetes, monofunktionelles Polyethylenoxid mit einer OH-Zahl von 112, gemessen nach DIN 53 240, entsprechend einem Molekulargewicht von 500 g/mol. Das Produkt war entsalzt und enthielt keine Salzreste aus der Herstellung.

### Polyisocyanat A:

Als Polyisocyanat A wurde ein allophanatgruppenhaltiges Polyisocyanat aus 1,6-Hexamethylendiisocyanat und 2-Hydroxyethylacrylat hergestellt analog Beispiel 1 der WO 00/39183, so dass nach destillativer Abtrennung des unumgesetzten 1,6-Hexamethylendiisocyanat (Restmonomerengehalt < 5 Gew.%) ein Polyisocyanat mit einem NCO-Gehalt von 15,1 %, einer Viskosität bei 23°C von 1200 mPas und einer via ¹H-NMR bestimmten Doppelbindungsdichte von 2 mol/kg erhalten wurde.

### Beispiel 1:

In einem Dreihalskolben mit Rührer und Thermometer wurden 300 g Polyisocyanat A mit 30 g des Polyethers A bei Raumtemperatur gemischt und dann 8 h bei 60°C umgesetzt. Das resultierende Produkt hatte einen NCO-Gehalt von 13,0 %, eine Viskosität von 1100 mPa*s (23°C) und ergab in Wasser eine feinteilige, nicht absetzende Dispersion.

## Patentansprüche

1. Wasseremulgierbare, strahlungshärtbare Polyisocyanate (A), enthaltend als Aufbaukomponenten
a) mindestens ein organisches Di- oder Polyisocyanat,
b) mindestens eine Verbindung mit mindestens einer gegenüber Isocyanat reaktiven Gruppe und mindestens einer radikalisch polymerisierbaren ungesättigten Gruppe und/oder mindestens einer kationisch polymerisierbaren Gruppe, ausgewählt aus gegebenenfalls substituierten Acryloylgruppen und gegebenenfalls substituierten Vinylethergruppen,
c) gegebenenfalls mindestens ein weiteres organisches Di- oder Polyisocyanat, das von a) verschieden ist,
d) mindestens eine Verbindung mit genau einer gegenüber Isocyanat reaktiven Gruppe und mindestens einer gesättigten dispergieraktiven Gruppe,
e) gegebenenfalls mindestens eine Verbindung mit mindestens zwei gegenüber Isocyanat reaktiven Gruppen sowie
f) gegebenenfalls von a) bis d) verschiedene Verbindungen mit mindestens einer gegenüber Isocyanat reaktiven Gruppe,
mit einem Gehalt an Allophanatgruppen (berechnet als C₂N₂HO₃ = 101 g/mol) von 1 bis 30 Gew%,
wobei die Mehrzahl der Verbindung b) über Allophanatgruppen gebunden ist, wobei als Aufbaukomponenten verkappte Aminogruppen-, Carbamatendgruppen- und/oder Harnstoffendgruppen-tragende Verbindungen ausgeschlossen sind und
wobei der Isocyanatgehalt, berechnet als NCO mit dem Molekulargewicht 42 g/mol, mindestens 3 Gew% und bis zu 25 Gew% beträgt, wobei es sich bei der Verbindung d) um mindestens eine Verbindung d3) handelt, die als dispergieraktive Gruppe mindestens eine nichtionische Gruppe trägt, bei der es sich um einen einwertigen Polyalkylenoxidpolyetheralkohol handelt, der 5 bis 90 Ethylenoxideinheiten enthält.

2. Polyisocyanate gemäß Anspruch 1, **dadurch gekennzeichnet, daß** der Gehalt an Allophanatgruppen (berechnet als C₂N₂HO₃ = 101 g/mol) mindestens 15 Gew% beträgt.

3. Polyisocyanate gemäß einem der vorstehenden Ansprüche, **dadurch gekennzeichnet, daß** der Gehalt an Oxadiazintriongruppen (berechnet als C₃N₂O₄ =128 g/mol) nicht mehr als 0,5 Gew% beträgt.

4. Beschichtungsmassen, enthaltend
(A) ein Polyisocyanat gemäß einem der vorstehenden Ansprüche,
(C) gegebenenfalls einen oder mehrere photochemisch und/oder thermisch aktivierbare(n) Initiator(en),
(D) gegebenenfalls weitere lacktypische Additive,
(E) mindestens eine Verbindung mit mehr als zwei gegenüber Isocyanat reaktiven Gruppen (Bindemittel) sowie
(F) gegebenenfalls mindestens eine Verbindung mit einer oder mehr als einer radikalisch polymerisierbaren Doppelbindung.

5. Beschichtungsmasse nach Anspruch 4, **dadurch gekennzeichnet, daß** das Bindemittel (E) ausgewählt ist aus der Gruppe bestehend aus Polyacrylatpolyolen, Polyesterpolyolen, Polyetherpolyolen, Polyurethanpolyolen, Polyharnstoffpolyolen, Polyesterpolyacrylatpolyolen, Polyesterpolyurothanpolyolem, Polyurethanpolyacrylatpolyolen, Polyurethanmodifizierten Alkydharzen, Fettsäuremodifizierten Poiyesterpolyurethanpolyolen, Kopolymerisaten mit Allylethem, Propfpolymerisaten aus den genannten Stoffgruppen mit z.B. unterschiedlichen Glasübergangstemperaturen, sowie Mischungen der genannten Bindemittel.

6. Verfahren zur Herstellung von wasseremulgierbaren, strahlungshärtbaren Polyisocyanaten, **dadurch gekennzeichnet, daß** man mindestens ein Diisocyanat a) in einem ersten Schritt mit mindestens einer Verbindung b) unter Reaktionsbedingungen umsetzt, unter denen bevorzugt Allophanate gebildet werden, man das so erhaltene allophanatgruppenhaltige Polyisocyanat anschließend in einem zweiten Schritt mit mindestens einer Verbindung d) unter Reaktionsbedingungen, unter denen bevorzugt Urethane gebildet werden, umsetzt, worin a) b) und d) die gleiche Bedeutung haben, wie in Anspruch 1.

7. Verfahren zur Herstellung von wasseremulgierbaren, strahlungshärtbaren Polyisocyanaten, **dadurch gekennzeichnet, daß** man mindestens eine oxadiazintriongruppenhaltige Verbindung a) in einem ersten Schritt mit mindestens einer Verbindung b) unter Reaktionsbedingungen umsetzt, unter denen der Oxadiazintrionring geöffnet wird, man das so erhaltene allophanatgruppenhaltige Polyisocyanat anschließend in einem zweiten Schritt mit mindestens einer Verbindung d) unter Reaktionsbedingungen, unter denen bevorzugt Urethane gebildet werden, umsetzt, worin a), b) und d) die gleiche Bedeutung haben, wie in Anspruch 1.

8. Verwendung der Polyisocyanate gemäß einem der Ansprüche 1 bis 3 oder hergestellt nach einem Verfahren gemäß einem der Ansprüche 6 oder 7 oder Beschichtungsmassen gemäß einem der Ansprüche 4 oder 5 zum Beschichten von Holz. Papier, Textil, Leder, Vlies, Kunststoffoberflächen, Glas, Keramik, mineralischen Baustoffen, Metallen oder beschichteten Metallen.

9. Verwendung der Polyisocyanate gemäß einem der Ansprüche 1 bis 3 oder hergestellt nach einem Verfahren gemäß einem der Ansprüche 6 oder 7 oder Beschichtungsmassen gemäß einem der Ansprüche 4 oder 5 als Grundierungen, Füller, pigmentierte Decklacke und Klarlacke im Bereich Industrie-, insbesondere Flugzeug- oder Großfahrzeuglackierung, Holz-, Auto-, insbesondere OEM- oder Autoreparaturlackierung, oder Dekolackierung.

## Claims

1. A water-emulsifiable, radiation-curable polyisocyanate (A) comprising as synthesis components
a) at least one organic di- or polyisocyanate,
b) at least one compound having at least one isocyanate-reactive group and at least one free-radically polymerizable unsaturated group and/or at least one cationically polymerizable group selected from optionally substituted acryloyl groups and optionally substituted vinyl ether groups,
c) optionally, at least one further organic di- or polyisocyanate, different than a)
d) at least one compound having precisely one isocyanate-reactive group and at least one saturated dispersive group,
e) optionally, at least one compound having at least two isocyanate-reactive groups, and
f) optionally, compounds different than a) to d) and having at least one isocyanate-reactive group,
having an allophanate group (calculated as C₂N₂HO₃ = 101 g/mol) content of 1% to 30% by weight,
the majority of the compound b) being attached via allophanate groups,
wherefrom compounds carrying capped amino groups, carbamate end groups and/or urea end groups are excluded as synthesis components, and
wherein the isocyanate content, calculated as NCO with the molecular weight 42 g/mol, is at least 3% by weight and up to 25% by weight, wherein the compound d) is at least one compound d3) which carries at least one nonionic group as dispersive group, in which it is a monohydric polyalkylene oxide polyether alcohol which comprises 5 to 90 ethylene oxide units.

2. The polyisocyanate according to claim 1, wherein the allophanate group (calculated as C₂N₂HO₃ = 101 g/mol) content is at least 15% by weight.

3. The polyisocyanate according to any one of the preceding claims, wherein the oxadiazinetrione group (calculated as C₃N₂O₄ = 128 g/mol) content is not more than 0.5% by weight.

4. A coating composition comprising
(A) a polyisocyanate according to any one of the preceding claims,
(C) optionally, one or more photochemically and/or thermally activable initiators,
(D) optionally, further, typical coatings additives,
(E) at least one compound having more than two isocyanate-reactive groups (binder), and
(F) optionally, at least one compound having one or more than one free- radically polymerizable double bond.

5. The coating composition according to claim 4, wherein said binder (E) is selected from the group consisting of polyacrylate polyols, polyester polyols, polyether polyols, polyurethane polyols, polyurea polyols; polyester polyacrylate polyols, polyester polyurethane polyols, polyurethane polyacrylate polyols, polyurethane-modified alkyd resins, fatty acid-modified polyester polyurethane polyols, copolymers with allyl ethers and graft polymers from the stated classes of compound having, for example, different glass transition temperatures, and also mixtures of the stated binders.

6. A process for preparing a water-emulsifiable, radiation-curable polyisocyanate, which comprises reacting at least one diisocyanate a) in a first step with at least one compound b) under reaction conditions under which allophanates are preferentially formed, subsequently reacting the resultant allophanate-functional polyisocyanate in a second step with at least one compound d) under reaction conditions under which urethanes are preferentially formed, wherein a), b) and d) have the same definition as in claim 1.

7. A process for preparing a water-emulsifiable, radiation-curable polyisocyanate, which comprises reacting at least one compound a) containing oxadiazinetrione groups in a first step with at least one compound b) under reaction conditions under which the oxadiazinetrione ring is opened and subsequently, in a second step, reacting the polyisocyanate thus obtained, containing allophanate groups, with at least one compound d) under reaction conditions under which urethanes are preferentially formed, wherein a), b), and d) have the same definition as in claim 1.

8. The use of a polyisocyanate according to any one of claims 1 to 3 or prepared by a process according to either of claims 6 and 7 or of a coating material of either of claims 4 and 5 for coating wood, paper, textile, leather, nonwoven, surfaces of plastics, glass, ceramic, mineral building materials or coated or uncoated metals.

9. The use of a polyisocyanate according to any one of claims 1 to 3 or prepared by a process according to either of claims 6 and 7 or of a coating material of either of claims 4 and 5 as a primer, surfacer, pigmented topcoat material or clearcoat material in industrial coating, especially aircraft or large-vehicle coating, wood coating, automotive finishing, especially OEM finishing or refinish, or decorative coating.

## Revendications

1. Polyisocyanates (A) émulsifiables dans l'eau, durcissables par un rayonnement, contenant comme composants constitutifs
a) au moins un diisocyanate ou polyisocyanate organique,
b) au moins un composé présentant au moins un groupe réactif par rapport à isocyanate et au moins un groupe insaturé polymérisable par voie radicalaire et/ou au moins un groupe polymérisable par voie cationique, choisi parmi les groupes acryloyle le cas échéant substitués et les groupes vinyléther le cas échéant substitués,
c) le cas échéant au moins un autre diisocyanate ou polyisocyanate organique, qui est différent de a),
d) au moins un composé présentant exactement un groupe réactif par rapport à isocyanate et au moins un groupe saturé actif en dispersion,
e) le cas échéant au moins un composé présentant au moins deux groupes réactifs par rapport à isocyanate, ainsi que
f) le cas échéant des composés différents de a) à d) présentant au moins un groupe réactif par rapport à isocyanate,
présentant un teneur en groupes allophanate (calculés sous forme de C₂N₂HO₃ = 101 g/mole) de 1 à 30% en poids, la majorité du composé b) étant liée via des groupes allophanate, les composés bloqués portant des groupes amino bloqués, des groupes carbamate terminaux et/ou des groupes urée terminaux étant exclus comme composants constitutifs et
la teneur en isocyanate, calculé sous forme de NCO présentant un poids moléculaire de 42 g/mole, étant d'au moins 3% en poids et allant jusqu'à 25% en poids, où il s'agit, pour le composé d), d'au moins un composé d3) qui porte comme groupe actif en dispersion au moins un groupe non ionique, pour lequel il s'agit d'un poly(oxyde d'alkylène)-polyétheralcool monovalent qui contient 5 à 90 unités d'oxyde d'éthylène.

2. Polyisocyanates selon la revendication 1, **caractérisés en ce que** la teneur en groupes allophanate (calculés sous forme de C₂N₂HO₃ = 101 g/mole) est d'au moins 15% en poids.

3. Polyisocyanates selon l'une quelconque des revendications précédentes, **caractérisés en ce que** la teneur en groupes oxadiazinetrione (calculés sous forme de C₃N₂O₄ = 128 g/mole) n'est pas supérieure à 0,5% en poids.

4. Masses de revêtement, contenant
(A) un polyisocyanate selon l'une quelconque des revendications précédentes,
(C) le cas échéant un ou plusieurs initiateur (s) activable(s) par voie photochimique et/ou thermique,
(D) le cas échéant d'autres additifs caractéristiques des laques,
(E) au moins un composé présentant plus de deux groupes réactifs par rapport à isocyanate (liants), ainsi que
(F) le cas échéant au moins un composé présentant une ou plus d'une double liaison polymérisable par voie radicalaire.

5. Masse de revêtement selon la revendication 4, **caractérisée en ce que** le liant (E) est choisi dans le groupe constitué par les polyacrylate-polyols, les polyester-polyols, les polyéther-polyols, les polyuréthane-polyols, les polyurée-polyols, les polyester-polyacrylate-polyols, les polyester-polyuréthane-polyols, les polyuréthane-polyacrylate-polyols, les résines alkyde modifiées par polyuréthane, les polyester-polyuréthane-polyols modifiés par des acides gras, les copolymères avec des allyléthers, les copolymères greffés des groupes de substances mentionnés présentant par exemple des températures de transition vitreuse différentes, ainsi que des mélanges des liants mentionnés.

6. Procédé pour la préparation de polyisocyanates émulsifiables dans l'eau, durcissables par un rayonnement, **caractérisé en ce qu'**on transforme au moins un diisocyanate a) dans une première étape avec au moins un composé b) dans des conditions de réaction dans lesquelles se forment de préférence des allophanates, on transforme ensuite le polyisocyanate contenant des groupes allophanate ainsi obtenu dans une deuxième étape avec au moins un composé d) dans des conditions de réaction dans lesquelles se forment de préférence des uréthanes, a), b) et d) ayant la même signification que dans la revendication 1.

7. Procédé pour la préparation de polyisocyanates émulsifiables dans l'eau, durcissables par un rayonnement, **caractérisé en ce qu'**on transforme au moins un composé a) contenant des groupes oxadiazinetrione dans une première étape avec au moins un composé b) dans des conditions de réaction dans lesquelles le cycle oxadiazinetrione est ouvert, on transforme ensuite le polyisocyanate contenant des groupes allophanate ainsi obtenu dans une deuxième étape avec au moins un composé d) dans des conditions de réaction dans lesquelles se forment de préférence des uréthanes, a), b) et d) ayant la même signification que dans la revendication 1.

8. Utilisation des polyisocyanates selon l'une quelconque des revendications 1 à 3 ou préparés selon un procédé selon l'une quelconque des revendications 6 ou 7 ou des masses de revêtement selon l'une quelconque des revendications 4 ou 5 pour le revêtement du bois, du papier, du textile, du cuir, d'un non-tissé, de surfaces en matériau synthétique, du verre, de la céramique, de matériaux de construction minéraux, de métaux ou de métaux revêtus.

9. Utilisation des polyisocyanates selon l'une quelconque des revendications 1 à 3 ou préparés selon un procédé selon l'une quelconque des revendications 6 ou 7 ou des masses de revêtement selon l'une quelconque des revendications 4 ou 5 comme couches de fond, charges, laques de recouvrement pigmentées et laques claires dans le domaine du laquage industriel, en particulier d'avions ou de grands véhicules, du laquage du bois, de voitures, en particulier du laquage de pièces détachées ou de réparation de voitures ou du laquage décoratif.
